# EUROPÄISCHE PATENTSCHRIFT

(11) **EP 4 294 663 B1**
(45) Veröffentlichungstag und Bekanntmachung des Hinweises auf die Patenterteilung: **13.08.2025**
(21) Anmeldenummer: 22710495.7
(22) Anmeldetag: 15.02.2022
(51) Int. Cl.: B60L 53/16, B60L 53/35, H01R 13/22, H01R 13/62, H01R 13/629, H01R 13/627, H01R 24/86, H01R 13/631, H01R 13/633, H01R 13/635, H01R 13/70, H01R 13/71, H01R 13/713, H01R 24/58, H01R 24/38, H01R 13/639

(54) **ELEKTRISCHE KONTAKTEINHEIT**
ELECRICAL CONTACT UNIT
UNITÉ DE CONTACT ÉLECTRIQUE

(30) Priorität: 16.02.2021 DE 102021201472
(43) Veröffentlichungstag der Anmeldung: 27.12.2023
(73) Patentinhaber: Fraunhofer-Gesellschaft zur Förderung der angewandten Forschung e.V., 80686 München (DE)
(72) Erfinder: KLAUSNER, Sven, 01069 Dresden (DE); VORWERK, Tim, 01069 Dresden (DE); SEILER, Christian, 01069 Dresden (DE)
(74) Vertreter: Pfenning, Meinig & Partner mbB
(86) Internationale Anmeldenummer: PCT/EP2022/053709
(87) Internationale Veröffentlichungsnummer: WO 2022/175286

(56) Entgegenhaltungen:
- EP-A1- 3 471 213
- EP-A1- 3 579 354
- EP-A1- 3 605 744
- WO-A1-2015/112355
- WO-A1-2016/119001
- DE-A1- 102011 114 321
- DE-A1- 102014 226 755
- DE-A1- 19 705 798

## Beschreibung

Die Anmeldung betrifft eine elektrische Kontakteinheit, ein Verfahren zum Betreiben der elektrischen Kontakteinheit sowie eine Verwendung der elektrischen Kontakteinheit. Die elektrische Kontakteinheit kann beispielsweise verwendet werden zum Laden eines elektrischen Batteriespeichers eines Fahrzeugs.

Eine notwendige Bedingung für die Realisierung eines batterieelektrischen Antriebskonzeptes, beispielsweise für ein Fahrzeug, ist eine Verfügbarkeit einer ausreichend großen Zeitreserve zu einer Nach- bzw. Wiederaufladung des Batteriespeichers durch Ausnutzung einer betriebs- oder nutzungsbedingten Stillstandszeit. Durch die Begrenztheit dieser Zeitreserve besteht die einzige Möglichkeit zur Erschließung weiterer Anwendungsszenarien in der Weiterentwicklung einer Schnellladefähigkeit des Batteriespeichers, also der Fähigkeit zum Nach- bzw. Wiederaufladen in kurzer Zeit, und eines zugehörigen Ladesystems.

Zu erwartende Fortschritte hinsichtlich einer erhöhten Leistungsdichte von Batteriespeichern führen bereits heute zu einer steigenden Laderate. Die Laderate ist ein Maß für das Verhältnis eines maximal möglichen Ladestroms, gemessen in Ampere (A), bezogen auf eine Nennkapazität des Batteriespeichers, gemessen in Amperestunden (Ah). Die Laderate stellt einen direkten Ausdruck dafür dar, wie schnell der Batteriespeicher geladen werden kann.

Eine hohe Laderate bedingt das Fließen eines hohen Ladestroms. Einem am Markt verfügbaren Kontaktstecksystem sind bezüglich hoher Ladeströme physikalisch bedingte Grenzen gesetzt, beispielsweise durch eine Qualität einer durch Berühren elektrischer Kontakte des Kontaktstecksystems hergestellten elektrischen Verbindung. Zur Gewährleistung einer ausreichend hohen Qualität der elektrischen Verbindung, das heißt eines geringen Übergangswiderstands, werden entweder eine große Kontaktfläche der elektrischen Kontakte und/oder eine hohe Kontaktkraft zwischen den elektrischen Kontakten benötigt. Letzterem ist bei ausschließlich menschlicher Handhabung eine natürliche Grenze gesetzt. Ferner würde eine Vergrößerung der Kontaktfläche für die Übertragung sehr großer Ströme bei dem gängigen Kontaktstecksystem zu Bauteilabmessungen führen, die einer menschlichen Handhabung entgegenstehen.

Aus der Druckschrift WO 2014/112355 A1 ist eine Kontakteinheit zum Herstellen einer elektrisch leitenden Verbindung bekannt, die umfasst: ein erstes Verbindungsteil mit einem ersten elektrischen Kontakt und ein zweites Verbindungsteil mit einem zweiten elektrischen Kontakt, wobei das erste Verbindungsteil und das zweite Verbindungsteil zueinander entlang einer Kontaktierungsachse, die in einer Kontaktierungsrichtung verläuft, bewegbar angeordnet sind; das erste Verbindungsteil einen ersten Abschnitt und einen zweiten Abschnitt umfasst, wobei der zweite Abschnitt bezüglich des ersten Abschnitts bewegbar und der erste elektrische Kontakt am zweiten Abschnitt angeordnet ist; das erste Verbindungsteil gegenüber dem zweiten Verbindungsteil so entlang der Kontaktierungsachse positionierbar ist, dass der erste Abschnitt des ersten Verbindungsteils gegenüber dem zweiten Verbindungsteil in einer Ruheposition zu liegen kommt; der erste elektrische Kontakt und der zweite elektrische Kontakt ausgebildet sind, wenn sie einander berühren, eine elektrisch leitende Verbindung zwischen dem ersten Verbindungsteil und dem zweiten Verbindungsteil herzustellen, die ausgebildet ist, eine elektrische Energie zu leiten. Ähnliche Kontakteinheiten sind außerdem aus den Druckschriften DE 10 2011 114321 A1, DE 197 05 798 A1 und WO 2016/119001 A1 bekannt.

Der vorliegenden Erfindung liegt die Aufgabe zugrunde, eine elektrische Kontakteinheit zum Herstellen einer elektrischen Verbindung, insbesondere einer elektrischen Stromverbindung, die zur elektrischen Leitung eines elektrischen Stroms, insbesondere eines hohen elektrischen Stroms, geeignet ist, sowie ein Verfahren zu deren Betrieb bereitzustellen. Die Aufgabe umfasst auch eine mögliche Verwendung der elektrischen Kontakteinheit zum Laden eines elektrischen Batteriespeichers.

Die Aufgabe wird gemäß den Merkmalen der unabhängigen Ansprüche gelöst. Weitere vorteilhafte Ausführungsformen der Erfindung sind in den auf die unabhängigen Ansprüche rückbezogenen Ansprüchen angegeben.

Die elektrische Kontakteinheit umfasst ein erstes Verbindungsteil mit einem ersten elektrischen Kontakt und ein zweites Verbindungsteil mit einem zweiten elektrischen Kontakt. Bei einem elektrischen Kontakt handelt es sich um eine Vorrichtung, die ein elektrisch leitendes Material umfasst, beispielsweise ein Metall, eine Legierung oder auch elektrisch leitfähiges organisches Material oder eine elektrisch leitfähige Ausprägung von Kohlenstoff. Ein elektrischer Kontakt ist dazu ausgebildet, durch Berühren mit einem weiteren elektrischen Kontakt oder einem elektrischen Leiter eine elektrisch leitende Verbindung zu diesem herzustellen. Ein Kontakt kann beispielsweise integraler Bestandteil einer anderen Vorrichtung sein, mit dieser verbunden sein oder auch als separate Vorrichtung ausgebildet sein. So ist es beispielsweise möglich, dass der erste Kontakt mit dem ersten Verbindungsteil verbunden ist und der zweite Kontakt mit dem zweiten Verbindungsteil. Die Verbindung kann beim ersten und/oder zweiten elektrischen Kontakt jeweils mit einem elastischen Vorspannelement, beispielsweise einer mechanischen Feder, realisiert sein, so dass die beiden Kontakte sich, wenn sie aneinander liegen, mit einer Vorspannkraft berühren können.

Das erste Verbindungsteil und das zweite Verbindungsteil sind zueinander entlang einer Kontaktierungsachse, die in einer Kontaktierungsrichtung verläuft, bewegbar angeordnet. Es ist beispielsweise möglich, dass das erste Verbindungsteil so bezüglich der Kontaktierungsachse angeordnet ist, dass die Kontaktierungsachse durch einen, zum Beispiel zentralen, Punkt des ersten Verbindungsteils hindurch läuft. Es ist beispielsweise auch möglich, dass das zweite Verbindungsteil so bezüglich der Kontaktierungsachse angeordnet ist, dass die Kontaktierungsachse durch einen, zum Beispiel zentralen, Punkt des zweiten Verbindungsteils hindurch läuft. Das erste Verbindungsteil umfasst einen ersten Abschnitt und einen zweiten Abschnitt, wobei der zweite Abschnitt bezüglich des ersten Abschnitts bewegbar und der erste elektrische Kontakt am zweiten Abschnitt angeordnet ist. Das erste Verbindungsteil ist gegenüber dem zweiten Verbindungsteil so entlang der Kontaktierungsachse positionierbar, dass der erste Abschnitt des ersten Verbindungsteils gegenüber dem zweiten Verbindungsteil in einer Ruheposition zu liegen kommt.

Der erste elektrische Kontakt und der zweite elektrische Kontakt sind ausgebildet, wenn sie einander berühren, eine elektrisch leitende Verbindung zwischen dem ersten Verbindungsteil und dem zweiten Verbindungsteil herzustellen. Das heißt, dass ein im oder am ersten Verbindungsteil angeordneter elektrischer Leiter, der mit dem ersten elektrischen Kontakt in elektrisch leitender Verbindung steht, mit einem im oder am zweiten Verbindungsteil angeordneten elektrischen Leiter, der mit dem zweiten elektrischen Kontakt in elektrisch leitender Verbindung steht, über ein Berühren des ersten elektrischen Kontakts mit dem zweiten elektrischen Kontakt in eine elektrische Verbindung gebracht werden können. Die elektrische Verbindung ist ausgebildet, eine elektrische Energie zu leiten, beispielsweise durch Leiten eines elektrischen Stroms.

Ferner umfasst die elektrische Kontakteinheit eine Positioniereinheit, die ausgebildet ist, die Ruheposition vorzugeben. Diese Positioniereinheit dient dazu, zu ermöglichen, das erste Verbindungsteil, insbesondere den ersten Abschnitt des ersten Verbindungsteils, bezüglich des zweiten Verbindungsteils räumlich zu positionieren, beispielsweise so, dass, ausgehend von der Ruheposition, der erste und der zweite elektrische Kontakt in Berührung gebracht werden können. Diese Positionierung des ersten bezüglich des zweiten Verbindungsteils ist vorteilhaft, da so, ausgehend von der Ruheposition, ein Zusammenführen oder voneinander Trennen von erstem und zweitem elektrischen Kontakt mit einer Abfolge weniger, leicht zu realisierender Bewegungen des ersten Kontaktes ausführbar sein kann.

Die Positioniereinheit kann beispielsweise mit einer Anschlagkante am ersten Verbindungsteil ausgeführt sein, mit der das erste Verbindungsteil am zweiten Verbindungsteil anstoßen kann. Die Positioniereinheit kann beispielsweise auch als eine Ausnehmung im ersten Verbindungsteil realisiert werden, mit der ein federgelagertes, am zweiten Verbindungsteil befestigtes Arretierungselement, das beispielsweise eine kugelige oder zylindrische oder insbesondere auch eine abgerundete Form aufweisen kann, dann in Eingriff gebracht werden kann, wenn das erste Verbindungsteil bezüglich des zweiten Verbindungsteils in der Ruheposition ist. Eine weitere beispielhafte Möglichkeit ergibt sich, wenn beispielsweise ein optisches System mit einem Lichtsensor und gegebenenfalls einer bereitgestellten Lichtquelle ein Signal ausgibt, wenn sich das erste Verbindungsteil bezüglich des zweiten Verbindungsteils in der Ruheposition befindet und das sich von einem Signal unterscheidet, wenn sich das erste Verbindungsteil bezüglich des zweiten Verbindungsteils nicht in der Ruheposition befindet.

Eine weitere beispielhafte Realisierungsmöglichkeit ergibt sich, ähnlich zur optischen Möglichkeit, durch Nutzung eines Magneten und eines Hall-Sensors, wobei der Magnet am ersten Verbindungsteil und der Hall-Sensor am zweiten Verbindungsteil oder andersherum jeweils in definierter Position zueinander angeordnet sind. Der Hall-Sensor erfasst ein vom Magneten ausgehendes Magnetfeld und gibt ein dazu korrespondierendes Signal aus, wobei sich das Signal, wenn sich das erste Verbindungsteil bezüglich des zweiten Verbindungsteils in der Ruheposition befindet von einem Signal unterscheidet, wenn sich das erste Verbindungsteil bezüglich des zweiten Verbindungsteils nicht in der Ruheposition befindet. Auf ähnliche Weise können Abstandssensoren, wie beispielsweise Wirbelstromsensoren oder auch induktive Sensoren zur Positionsbestimmung genutzt werden.

Eine weitere Möglichkeit zur Vorgabe der Ruheposition besteht beispielsweise darin, einen Schalter, der lediglich in der Ruheposition betätigt ist, zu nutzen oder auch ein bildbasiertes System, beispielsweise mit einer Kamera, bei dem mit einem Bildauswertungsverfahren die Position des ersten Verbindungsteils bezüglich des zweiten Verbindungsteils festgestellt werden kann und, wenn sich das erste Verbindungsteil bezüglich des zweiten Verbindungsteils in der Ruheposition befindet, ein dazu korrespondierendes Signal bereitgestellt wird.

Die elektrische Kontakteinheit umfasst darüber hinaus einen Aktuator, der ausgebildet ist, wenn sich der erste Abschnitt des ersten Verbindungsteils in der Ruheposition befindet, den zweiten Abschnitt des ersten Verbindungsteils in der Kontaktierungsrichtung relativ zum ersten Abschnitt so zu verschieben, dass der zweite Abschnitt des ersten Verbindungsteils und das zweite Verbindungsteil in der Kontaktierungsrichtung aneinander liegen sowie der erste elektrische Kontakt und der zweite elektrische Kontakt einander berühren.

Der Aktuator kann zwei zueinander bewegbare Abschnitte umfassen, beispielsweise einen Fixierungsabschnitt und einen Bewegungsabschnitt. Beispielsweise kann diese Bewegung mit Hilfe von elektrischer Energie angetrieben sein, wobei die Bewegung hierbei über einen elektrisch betriebenen Motor bereitgestellt werden kann. In diesem Zusammenhang sind auch andere Antriebsformen denkbar, beispielsweise ein Antrieb, der eine hydraulische und/oder pneumatische und/oder magnetische und/oder auch eine weitere mechanische Komponente, wie beispielsweise ein Getriebe, umfasst. Wird nun beispielsweise der Aktuator mit dem Fixierungsabschnitt am ersten Abschnitt des ersten Verbindungsteils fixiert, kann durch Bewegung des Bewegungsabschnitts und, beispielsweise, ein Anstoßen des Bewegungsabschnitts an den zweiten Abschnitt des ersten Verbindungsteils eine Bewegung des zweiten Abschnitts relativ zum ersten Abschnitt bewirkt werden. Der Aktuator kann beispielsweise ein Linearaktuator sein, der eine lineare Bewegung bewirkt. Es ist somit auch möglich, dass der Fixierungsabschnitt und der Bewegungsabschnitt eine zueinander lineare Bewegung ausführen können. Durch die Berührung zwischen erstem und zweitem Kontakt kommt es zu einer elektrisch leitenden Verbindung zwischen beiden, wobei über diese elektrisch leitende Verbindung ein Stromfluss zwischen dem ersten Verbindungsteil und dem zweiten Verbindungsteil ermöglicht wird.

Die Kontakteinheit umfasst ein Verriegelungselement; wobei das Verriegelungselement zwischen einer Verriegelungsposition und einer Entriegelungsposition bewegbar ist; und wobei das Verriegelungselement in der Verriegelungsposition eine Bewegung des ersten Abschnitts des ersten Verbindungsteils relativ zum zweiten Verbindungsteil verhindert. Das Verriegelungselement lässt in der Verriegelungsposition eine Bewegung des zweiten Abschnitts des ersten Verbindungsteils relativ zum ersten Abschnitt des ersten Verbindungsteils zu; und gestattet in der Entriegelungsposition eine Bewegung des ersten Abschnitts des ersten Verbindungsteils relativ zum zweiten Verbindungsteil. Gleichfalls verhindert das Verriegelungselement in der Entriegelungsposition eine Bewegung des zweiten Abschnitts des ersten Verbindungsteils relativ zum ersten Abschnitt des ersten Verbindungsteils.

Insofern kann das Verriegelungselement mit mehreren Vorteilen verbunden sein.

Zum einen ist damit eine Verriegelung des ersten Abschnitts des ersten Verbindungsteils relativ zum zweiten Verbindungsteil möglich. Verriegelung bedeutet hier, dass, wenn sich das Verriegelungselement in der Verriegelungsposition befindet, der erste Abschnitt und das zweite Verbindungsteil nicht wesentlich zueinander bewegt werden können und dann ein unbeabsichtigtes Entfernen des ersten Verbindungsteils vom zweiten Verbindungsteil nicht möglich ist. Das Entfernen während eines Ladevorgangs wäre aufgrund der hohen zu erwartenden Ladeströme gefährlich für Benutzer und könnte gleichfalls zu einer zumindest teilweisen Zerstörung der elektrischen Kontakteinheit oder damit verbundener Anlagenteile führen, beispielsweise durch Brand aufgrund lockerer Strom führender Kontakte.

Zum anderen kann die Verriegelung mit dem Verriegelungselement die Bereitstellung möglicher Kontaktkräfte zwischen dem ersten und dem zweiten Verbindungsteil, insbesondere zwischen dem ersten elektrischen Kontakt und dem zweiten elektrischen Kontakt ermöglichen. Durch die Verriegelung wären beispielsweise vor allem sehr hohe Kontaktkräfte möglich.

Desweiteren ist es vorstellbar, dass in der Entriegelungsposition die Bewegung des zweiten Abschnitts bezüglich des ersten Abschnitts unterbunden wird. Vorteilhaft wäre das, weil so, beispielsweise in einem Zustand, in dem sich das erste Verbindungsteil nicht in der Ruheposition befindet, eine im Regelfall unerwünschte Bewegung des zweiten Abschnitts bezüglich des ersten Abschnitts unterbunden werden kann. So ist es möglich, dass die Abschnitte des ersten Verbindungsteils, insbesondere in dem Fall, bei dem sich das erste Verbindungsteil nicht in der Ruheposition befindet, in einer kompakten Form zusammengehalten werden und sich nicht voneinander entfernen können.

In einer Ausführungsform kann es sein, dass der erste Abschnitt des ersten Verbindungsteils eine Verriegelungsausnehmung und das zweite Verbindungsteil eine weitere Ausnehmung aufweisen. Es ist dann denkbar, dass das Verriegelungselement, wenn es sich in der Verriegelungsposition befindet, mit der Verriegelungsausnehmung des ersten Abschnitts des ersten Verbindungsteils und der Ausnehmung des zweiten Verbindungsteils in Eingriff steht. Es ist hierbei vorstellbar, dass die Verriegelungsausnehmung des ersten Abschnitts und die Ausnehmung des zweiten Verbindungsteils sich gegenüberliegend angeordnet sind, insbesondere wenn sich das erste Verbindungsteil bezüglich des zweiten Verbindungsteils in der Ruheposition befindet, und dass, beispielsweise, das Verriegelungselement durch die Verriegelungsausnehmung des ersten Abschnitts in die Ausnehmung des zweiten Verbindungsteils eingeführt wird und dort zum Liegen kommt, was der Verriegelungsposition entspricht. Man kann sich zudem vorstellen, dass, in der Entriegelungsposition, sich das Verriegelungselement oder Abschnitte davon weder in der Verriegelungsausnehmung des ersten Abschnitts noch in der Ausnehmung des zweiten Verbindungsteils befinden.

Es ist ferner möglich, dass der Aktuator mit dem ersten Abschnitt des ersten Verbindungsteils verbunden ist. Auf diese Weise kann die Bewegung des zweiten Abschnitts des ersten Verbindungsteils relativ zum ersten Abschnitt besonders gut realisiert werden. Insbesondere wenn der erste Abschnitt und der Aktuator, beispielsweise am Fixierungsabschnitt, starr miteinander verbunden sind, bilden Aktuator und erster Abschnitt zusammen eine Referenz für eine dazu relative Bewegung des zweiten Abschnitts, die durch die Bewegung des Bewegungsabschnitts des Aktuators gegen eine Fläche des zweiten Abschnitts des ersten Verbindungsteils bewirkt werden kann. Durch die Bewegung des Bewegungsabschnitts gegen die Fläche des zweiten Abschnitts des ersten Verbindungsteils kann eine Kraft auf den zweiten Abschnitt ausgeübt werden, die zu einer Verschiebung des zweiten Abschnitts des ersten Verbindungsteils führen kann, so dass im Ergebnis der Verschiebung der zweite Abschnitt des ersten Verbindungsteils und das zweite Verbindungsteil in der Kontaktierungsrichtung aneinander liegen sowie der erste elektrische Kontakt und der zweite elektrische Kontakt einander berühren.

In einer Ausführungsform ist möglich, dass der Aktuator ausgebildet ist, das Verriegelungselement von der Verriegelungsposition in die Entriegelungsposition und umgekehrt zu bewegen. Dazu kann es sein, dass der Aktuator mit dem Verriegelungselement kinematisch gekoppelt ist, beispielsweise über einen Hebelmechanismus, eine Führungsschiene oder eine Führungsnut. Wird nun beispielsweise der Fixierungsabschnitt des Aktuators mit dem ersten Abschnitt verbunden, insbesondere ist hier eine starre Verbindung denkbar, dann kann der Bewegungsabschnitt des Aktuators mit Hilfe der kinematischen Kopplung mit dem Verriegelungselement gekoppelt werden. Dann kann eine Bewegung des Bewegungsabschnitts des Aktuators, die relativ zum ersten Abschnitt des ersten Verbindungsteils erfolgt, auf das Verriegelungselement übertragen werden. Das kann eine Bewegung des Verriegelungselements relativ zum ersten Abschnitt des ersten Verbindungsteils bewirken und zwar so, dass beispielsweise das Verriegelungselement in oder, zumindest auch teilweise durch, die Verriegelungsausnehmung des ersten Abschnitts des ersten Verbindungsteils und/oder in die Ausnehmung des zweiten Verbindungsteils geschoben wird oder in umgekehrter Richtung aus der Ausnehmung des zweiten Verbindungsteils und/oder der Verriegelungsausnehmung herausgezogen wird.

Die Kontakteinheit kann einen Elektromagneten und ein Magnetgegenelement aufweisen. Dabei ist es möglich, dass der Elektromagnet, in einem aktiven Zustand und wenn der zweite Abschnitt des ersten Verbindungsteils und das zweite Verbindungsteil in Kontaktierungsrichtung aneinander liegen, mittels eines Magnetfelds zusammen mit dem Magnetgegenelement eine magnetische Anziehungskraft zwischen dem zweiten Abschnitt des ersten Verbindungsteils und dem zweiten Verbindungsteil bereitstellt. Die magnetische Anziehungskraft kann mindestens so groß sein, dass damit der zweite Abschnitt des ersten Verbindungsteils in einer Position gehalten wird, in der sich der erste elektrische Kontakt und der zweite elektrische Kontakt berühren. Elektromagnet und Magnetgegenelement können somit dafür sorgen, dass eine elektrische Verbindung zwischen dem ersten elektrischen Kontakt und dem zweiten elektrischen Kontakt aufrechterhalten wird. Dies ist auch dann möglich, wenn der Aktuator keine Kraft auf den zweiten Abschnitt des ersten Verbindungsteils ausübt. Letzteres kann beispielsweise der Fall sein, wenn der Bewegungsabschnitt des Aktuators relativ zum Fixierungsabschnitt so bewegt wird, dass der Bewegungsabschnitt keine Kraft auf die Fläche des zweiten Abschnitts des ersten Verbindungsteils ausübt. Darüber hinaus ist es auch möglich, dass durch die magnetische Anziehungskraft eine Kontaktkraft zwischen dem ersten elektrischen Kontakt und dem zweiten elektrischen Kontakt aufgebaut wird, die die Qualität der elektrischen Verbindung zwischen dem ersten und dem zweiten elektrischen Kontakt verbessern kann.

Das Magnetgegenelement umfasst ein magnetisches Material, beispielsweise Eisen, auf das ein Magnetfeld eine anziehende Wirkung hat.

Der Elektromagnet befindet sich im aktiven Zustand, wenn eine Spulenwindung des Elektromagneten von elektrischem Strom durchflossen wird und auf diese Weise ein Magnetfeld bereitgestellt wird. Es ist somit möglich, den Elektromagneten durch Aktivieren eines elektrischen Stromflusses durch die Spulenwindung, beispielsweise mit einem Schalter, in den aktiven Zustand zu versetzen. Der Elektromagnet kann in einen inaktiven Zustand versetzt werden, wenn der elektrische Stromfluss durch die Spulenwindung deaktiviert wird, beispielsweise mit einem Schalter. Der Schalter zum Aktivieren oder Deaktivieren des elektrischen Stromflusses durch die Spulenwindung des Elektromagneten kann steuerbar, beispielsweise durch eine Steuervorrichtung, gestaltet sein.

Die Kontakteinheit kann so geformt sein, dass der erste elektrische Kontakt einen ersten Leistungskontakt und der zweite elektrische Kontakt einen zweiten Leistungskontakt umfasst. Der Leistungskontakt ist dazu ausgebildet, elektrische Energie zu leiten, das heißt zu transportieren. Im Allgemeinen ist der Leistungskontakt so ausgelegt, dass er geeignet ist, pro vordefinierter Zeiteinheit mindestens eine vordefinierte Menge an elektrischer Energie, also eine elektrische Leistung, zu leiten. Dazu wird im Allgemeinen eine Ausdehnung des Leistungskontaktes größer oder gleich einem materialabhängigen Minimalwert gewählt.

Es ist möglich, dass der erste elektrische Kontakt und der zweite elektrische Kontakt ausgebildet sind, eine hohe elektrische Leistung bei einer elektrischen Spannung bis zu 1500 Volt und bei einem elektrischen Strom von bis zu 1600 Ampere, bevorzugt bis zu 1900 Ampere und besonders bevorzugt bis zu 3000 Ampere zu leiten. Eine elektrische Verbindung, die einen solchen Strom leiten kann, beispielsweise oder auch insbesondere ohne zeitliche Beschränkung, kann eine Hochstromverbindung sein oder als Hochstromverbindung bezeichnet werden. Die elektrische Verbindung, die durch Berühren des ersten elektrischen Kontakts mit dem zweiten elektrischen Kontakt hergestellt werden kann, kann eine Hochstromverbindung sein. Bei dem elektrischen Strom kann es sich beispielsweise um einen Gleichstrom handeln. Denkbar ist jedoch auch ein Wechselstrom.

In einer Ausführungsform der Kontakteinheit ist es möglich, dass der erste elektrische Kontakt und der zweite elektrische Kontakt gegenüberliegend jeweils an einer Fläche angeordnet sind, die jeweils im Wesentlichen parallel und beabstandet zur Kontaktierungsachse ausgerichtet ist. Gleichzeitig oder alternativ ist es möglich, dass der erste elektrische Kontakt und der zweite elektrische Kontakt gegenüberliegend jeweils an einer Fläche angeordnet sind, die jeweils im Wesentlichen senkrecht zur Kontaktierungsachse ausgerichtet ist. Es zeigt sich insofern, dass zur Verfügung stehende Flächen des ersten Verbindungsteils und des zweiten Verbindungsteils effizient zur Anordnung der elektrischen Kontakte genutzt werden können. Dies kann bedeutsam sein, wenn beispielsweise ein elektrischer Kontakt mehrere Abschnitte aufweist, die voneinander beabstandet sein müssen, beispielsweise aus Sicherheitsgründen. Durch die effiziente Nutzung der zur Verfügung stehenden Flächen kann das Volumen der Kontakteinheit auf ein notwendiges Maß beschränkt werden.

In einer Ausführungsform ist es vorstellbar, dass das erste Verbindungsteil einen ersten Schutzleiterkontakt und das zweite Verbindungsteil einen zweiten Schutzleiterkontakt umfasst. Dabei kann es sein, dass der erste Schutzleiterkontakt mit einem elektrischen Erdpotential elektrisch verbunden ist. Es ist außerdem möglich, dass der erste Schutzleiterkontakt bei Berührung mit dem zweiten Schutzleiterkontakt eine elektrische Verbindung des zweiten Schutzleiterkontaktes mit dem elektrischen Erdpotential herstellt. Es ist grundsätzlich auch vorstellbar, dass erster und zweiter Schutzleiter vertauschte Rollen aufweisen. Das heißt, dass beispielsweise der zweite Schutzleiterkontakt mit dem elektrischen Erdpotential elektrisch verbunden ist. Und es ist dann auch möglich, dass der zweite Schutzleiterkontakt bei Berührung mit dem ersten Schutzleiterkontakt eine elektrische Verbindung des ersten Schutzleiterkontaktes mit dem elektrischen Erdpotential herstellt.

Der erste und der zweite Schutzleiterkontakt können ein elektrisch leitendes Material umfassen, beispielsweise ein Metall, eine Legierung oder auch elektrisch leitfähiges organisches Material oder eine elektrisch leitfähige Ausprägung von Kohlenstoff.

Der vorteilhafte Effekt eines Schutzleiterkontaktes besteht darin, dass damit ein eventueller Fehlerstrom zum Erdpotential abgeleitet werden kann und auf diese Weise dessen schädliche Wirkung, beispielsweise für einen Benutzer der Kontakteinheit oder die Kontakteinheit oder angeschlossene Anlagenteile vermindert werden kann.

Es besteht die Möglichkeit, dass der zweite Schutzleiterkontakt mit einem Schutzleitervorspannelement zusammenwirkt, das ausgebildet ist, bei Berührung des ersten Schutzleiterkontaktes mit dem zweiten Schutzleiterkontakt eine Kontaktkraft zwischen dem ersten und zweiten Schutzleiterkontakt bereitzustellen. Beispielsweise kann das Schutzleitervorspannelement eine mechanische Feder sein, die zum einen mit dem zweiten Verbindungsteil und zum anderen mit dem zweiten Schutzleiterkontakt verbunden ist. Es ist denkbar, dass die mit dem Schutzleitervorspannelement verbundene Kraftwirkung in Kontaktierungsrichtung wirkt. Durch die Kontaktkraft zwischen dem ersten und dem zweiten Schutzleiterkontakt kann die Qualität der elektrischen Verbindung zwischen beiden Schutzleiterkontakten verbessert werden, beispielsweise durch eine dadurch bedingte Verminderung eines Übergangswiderstandes. Außerdem kann damit ein Risiko einer unbeabsichtigten Unterbrechung der Berührung zwischen beiden Schutzleiterkontakten, und damit einer Unterbrechung der damit verbundenen elektrischen Verbindung, vermindert werden.

Alternativ ist es auch möglich, dass der erste Schutzleiterkontakt mit einem Schutzleitervorspannelement zusammenwirkt, wobei die Erläuterungen zum Schutzleitervorspannelement, das mit dem zweiten Schutzleiterkontakt zusammenwirkt, in analoger Weise gelten. Lediglich die Anbringung des Schutzleitervorspannelements kann dann beispielsweise zwischen zweitem Abschnitt des ersten Verbindungsteils und erstem Schutzleiterkontakt erfolgen.

In einer Ausführungsform ist es denkbar, dass der erste und der zweite Schutzleiterkontakt gegenüberliegend jeweils an einer Fläche angeordnet sind, die jeweils im Wesentlichen senkrecht zur Kontaktierungsachse ausgerichtet ist. Es kann aber auch sein, dass der erste Schutzleiterkontakt und der zweite Schutzleiterkontakt gegenüberliegend jeweils an einer Fläche angeordnet sind, die jeweils im Wesentlichen parallel und beabstandet zur Kontaktierungsachse ausgerichtet ist. Es zeigt sich abermals, dass zur Verfügung stehende Flächen des ersten Verbindungsteils und des zweiten Verbindungsteils effizient zur Anordnung der elektrischen Kontakte genutzt werden können.

Dies kann bedeutsam sein, wenn beispielsweise ein elektrischer Kontakt mehrere Abschnitte aufweist, die voneinander beabstandet sein müssen, beispielsweise aus Sicherheitsgründen. Durch die effiziente Nutzung der zur Verfügung stehenden Flächen kann das Volumen der Kontakteinheit auf ein notwendiges Maß beschränkt werden.

Es ist im Einklang mit der vorliegenden Offenbarung, wenn das erste Verbindungsteil einen ersten Control-Pilot-Kontakt und das zweite Verbindungsteil einen zweiten Control-Pilot-Kontakt umfasst. Es ist hierbei möglich, dass, wenn der erste und der zweite Control-Pilot-Kontakt einander berühren, eine auswertbare elektrische Verbindung zwischen ihnen zustande kommt.

Der erste und der zweite Control-Pilot-Kontakt können ein elektrisch leitendes Material umfassen, beispielsweise ein Metall, eine Legierung oder auch elektrisch leitfähiges organisches Material oder eine elektrisch leitfähige Ausprägung von Kohlenstoff.

Auswertbar kann in diesem Zusammenhang bedeuten, dass beispielsweise geprüft werden kann, ob die elektrische Verbindung zwischen dem ersten Control-Pilot-Kontakt und dem zweiten Control-Pilot-Kontakt besteht oder nicht besteht. Diese Prüfung kann von einer Steuereinheit veranlasst, gesteuert und ausgewertet werden, beispielsweise, in dem versucht wird, einen Strom über diese elektrische Verbindung zu leiten. Gelingt dies, kann davon ausgegangen werden, dass die elektrische Verbindung besteht beziehungsweise, falls dies nicht gelingt, die elektrische Verbindung nicht besteht. Da die Anordnung des jeweiligen Control-Pilot-Kontaktes im ersten beziehungsweise zweiten Verbindungsteil bekannt ist, kann aus dem Bestehen oder Nicht-Bestehen der elektrischen Verbindung auf eine Position des ersten Verbindungsteils oder eines Abschnitts des ersten Verbindungsteils bezüglich des zweiten Verbindungsteils geschlussfolgert werden. Dies kann beispielsweise genutzt werden, um festzustellen, ob das erste und das zweite Verbindungsteil so zueinander ausgerichtet sind, dass eine Energieübertragung, beispielsweise unter Einhaltung von möglichen Sicherheitsanforderungen, durchgeführt werden kann.

Auswertbar kann in diesem Zusammenhang auch bedeuten, dass die elektrische Verbindung zwischen dem ersten Control-Pilot-Kontakt und dem zweiten Control-Pilot-Kontakt, wenn sie besteht, genutzt werden kann, um elektrische Signale, die Informationen repräsentieren, zwischen dem ersten und dem zweiten Verbindungsteil zu übertragen. So ist es beispielsweise möglich, ein Steuersignal oder ein Signal, dass eine sensorische Information oder auch eine Zustandsinformation enthalten kann, zwischen beiden Verbindungsteilen zu übertragen. Eine solche Information kann beispielsweise einen Ladezustand, einen Spannungsmesswert, einen Strommesswert, eine Identität, eine Authentifizierungsinformation, eine Preisinformation, kurz Informationen und/oder Daten, die für den Betrieb der Kontakteinheit und/oder der damit verbundenen Anlagen von Interesse sein können, umfassen. Um derartige Informationen übertragen zu können, können die Control-Pilot-Kontakte jeweils mit einer Steuereinheit, beispielsweise mit einer ersten Steuereinheit und/oder einer zweiten Steuereinheit, verbunden sein, oder aber auch mit einem Sensor oder weiteren, beispielsweise, elektronischen Schaltmodulen, wobei die Verbindung jeweils über eine elektrische Leitung, beispielsweise eine Twisted-Pair-Leitung, implementiert sein kann. Es ist dabei denkbar, dass der erste und der zweite Control-Pilot-Kontakt jeweils eine oder mehrere elektrische Verbindungsflächen aufweisen, an denen jeweils eine elektrische Verbindung zwischen dem ersten und dem zweiten Control-Pilot-Kontakt, wenn der erste und der zweite Control-Pilot-Kontakt einander berühren, hergestellt werden kann. Dabei ist es auch vorstellbar, dass die elektrischen Verbindungen zwischen dem ersten und dem zweiten Control-Pilot-Kontakt jeweils paarweise genutzt werden, beispielsweise für eine Übertragung eines oder mehrerer Signale. Auf diese Weise können der erste und der zweite Control-Pilot-Kontakt beispielsweise auch Teil einer elektrischen Kommunikationsverbindung zwischen der mit dem ersten Control-Pilot-Kontakt verbundenen Steuereinheit und der mit dem zweiten Control-Pilot-Kontakt verbundenen Steuereinheit sein. An die Stelle der jeweiligen Steuereinheit können auch andere elektrische oder elektronische Module des jeweiligen Verbindungsteils oder jeweils damit verbundener Anlagen, beispielsweise ein Steuergerät eines Fahrzeugs oder ein Steuergerät einer Ladesäule, treten. Prinzipiell können die Control-Pilot-Kontakte insofern vorteilhaft für Steuerungsaufgaben, die beim Betrieb der Kontakteinheit auftreten können, eingesetzt werden.

Es ist auch denkbar, dass ein Teil der Funktionalität eines Control-Pilot-Kontaktes von einem Schutzleiterkontakt bereitgestellt wird. Beispielsweise kann es sein, dass eine elektrisch leitende Fläche eines Schutzleiterkontaktes eine der elektrischen Verbindungsflächen eines Control-Pilot-Kontaktes bildet oder von diesem umfasst ist. So ist es also denkbar, dass der erste Schutzleiterkontakt eine elektrisch leitende Fläche für den ersten Control-Pilot-Kontakt bereitstellt und der zweite Schutzleiterkontakt eine elektrisch leitende Fläche für den zweiten Control-Pilot-Kontakt bereitstellt. In einem solchen Fall könnte die elektrisch leitende Fläche des Schutzleiterkontakts eine geringere Oberfläche als bei einem gewöhnlichen Schutzleiterkontakt aufweisen, der für die Bereitstellung eines Erdpotentials und/oder die Ableitung eines Fehlerstroms vorgesehen sein kann. Eine elektrische Verbindung zwischen dem ersten und dem zweiten Control-Pilot-Kontakt kann dann auch, zumindest teilweise, durch eine elektrisch leitende Verbindung zwischen erstem und zweitem Schutzleiterkontakt bereitgestellt werden.

Es besteht die Möglichkeit, dass der erste und der zweite Control-Pilot-Kontakt zwischen dem Elektromagnet und dem Magnetgegenelement angeordnet sind. Durch diese definierte Position kann beispielsweise ermöglicht werden, aus einer Berührung der beiden Control-Pilot-Kontakte, die beispielsweise durch Feststellen einer elektrischen Verbindung zwischen beiden Control-Pilot-Kontakten festgestellt werden kann, auf die Position des zumindest eines Abschnitts des ersten Verbindungsteils relativ zum zweiten Verbindungsteil zu schlussfolgern. Der erste Control-Pilot-Kontakt kann auch mit einem elektrisch leitfähigen Abschnitt des Elektromagneten bereitgestellt werden. Der zweite Control-Pilot-Kontakt kann mit einem elektrisch leitfähigen Abschnitt des Magnetgegenelements bereitgestellt werden.

In einer Ausführungsform kann das zweite Verbindungsteil einen beweglichen, mit einem Vorspannelement versehenen Kontaktschutzrücksteller umfassen. Dabei ist es denkbar, wenn sich der erste Abschnitt des ersten Verbindungsteils in der Ruheposition befindet, den zweiten Abschnitt des ersten Verbindungsteils in Kontaktierungsrichtung relativ zum ersten Abschnitt so zu verschieben, dass der erste elektrische Kontakt und der zweite elektrische Kontakt voneinander beabstandet werden. Bei dem Kontaktschutzrücksteller kann es sich um ein Element aus einem isolierenden Material handeln, beispielsweise einem nichtleitenden Kunststoff. Das Vorspannelement kann eine Feder sein, beispielsweise eine Schraubenfeder oder eine Tellerfeder. Es ist dann auch möglich, dass das Vorspannelement mit dem zweiten Verbindungsteil und mit dem Kontaktschutzrücksteller verbunden ist. Das Vorspannelement kann eine Kraft auf den Kontaktschutzrücksteller ausüben, so dass dieser sich relativ zum zweiten Verbindungsteil bewegen kann. Dabei ist es denkbar, dass, bei dieser Bewegung, der Kontaktschutzrücksteller gegen den zweiten Abschnitt des ersten Verbindungsteils drückt und den zweiten Abschnitt verschiebt. Diese Verschiebung kann so ausgeführt sein, dass im Ergebnis der Verschiebung des zweiten Abschnitts der erste elektrische Kontakt vom zweiten elektrischen Kontakt beabstandet ist.

In einer möglichen Interaktion mit dem Elektromagneten kann es vorteilhaft sein, wenn sich der Elektromagnet während des Verschiebens zum Beabstanden des ersten vom zweiten elektrischen Kontakt in dem inaktiven Zustand befindet. Es ist ferner möglich, dass der Kontaktrücksteller während des Verschiebens zum Beabstanden zwischen den ersten und den zweiten elektrischen Kontakt verschoben wird oder in eine Position gelangt, in der durch die Anwesenheit des Kontaktrückstellers die Herstellung einer elektrischen Verbindung zwischen dem ersten elektrischen Kontakt und dem zweiten elektrischen Kontakt ausgeschlossen ist. Der Vorteil, der sich aus einer solchen Anordnung ergeben kann, besteht darin, dass, beispielsweise, wenn der Elektromagnet in einen inaktiven Zustand übergeht, eine Trennung der elektrischen Verbindung zwischen dem ersten und zweiten elektrischen Kontakt durch Beabstanden und eine elektrische Isolation beider Kontakte voneinander erfolgt.

In einer Ausführungsvariante ist es möglich, dass der zweite elektrische Kontakt bewegbar ist. Es ist auch möglich, dass zwischen dem zweiten elektrischen Kontakt und dem Kontaktschutzrücksteller eine kinematische Kopplung eingerichtet ist. Dabei ist es auch denkbar, dass die kinematische Kopplung eine Bewegung des Kontaktrückstellers auf den zweiten elektrischen Kontakt zur Bereitstellung einer Berührung mit einer Kontaktkraft zwischen dem ersten elektrischen Kontakt und dem zweiten elektrischen Kontakt oder zum Beabstanden des ersten elektrischen Kontaktes und des zweiten elektrischen Kontakts voneinander überträgt. So kann man sich vorstellen, dass der Kontaktrücksteller durch eine Bewegung des zweiten Abschnitts des ersten Verbindungsteils bewegt wird, in dem der zweite Abschnitt gegen den Kontaktrücksteller drückt und diesen verschiebt. Durch die kinematische Kopplung kann es sein, dass der zweite elektrische Kontakt so bewegt wird, dass er sich dem ersten elektrischen Kontakt nähert bis er diesen berührt und schließlich eine Kontaktkraft zwischen dem ersten elektrischen Kontakt und dem zweiten elektrischen Kontakt aufgebaut wird. Dieser Vorgang kann beispielsweise optimiert werden, in dem die kinematische Kopplung und das Vorspannelement des Kontaktrückstellers so kombiniert werden, dass das Vorspannelement des Kontaktrückstellers gleichzeitig als Vorspannelement für den zweiten elektrischen Kontakt wirken kann.

Wenn der zweite Abschnitt des ersten Verbindungsteils nicht gegen den Kontaktrücksteller drückt, beispielsweise wenn der Elektromagnet sich in einem inaktiven Zustand befindet und/oder die Position des Bewegungsabschnitts des Aktuators eine Bewegung des zweiten Abschnitts des ersten Verbindungsteils zulässt, kann sich der Kontaktrücksteller aufgrund der vom Vorspannelement des Kontaktrückstellers ausgeübten Kraft so bewegen, dass der zweite Abschnitt des ersten Verbindungsteils vom Kontaktrücksteller durch drücken so bewegt wird, dass sich der erste elektrische Kontakt vom zweiten elektrischen Kontakt räumlich entfernt. Gleichzeitig kann durch die kinematische Kopplung auch der zweite elektrische Kontakt selbst bewegt werden, so dass sich der räumliche Abstand zwischen erstem und zweitem elektrischen Kontakt auch dadurch vergrößert.

Es ist denkbar, dass das Schutzleitervorspannelement und das Vorspannelement des Kontaktschutzrückstellers so eingerichtet sind, dass bei einer Herstellung einer elektrischen Verbindung zwischen dem ersten Verbindungsteil und dem zweiten Verbindungsteil die Kontaktierungsreihenfolge Schutzleiterkontakte, erste und zweite Kontakte, Control-Pilot-Kontakte bereitgestellt wird. Bei einer Trennung der elektrischen Verbindung zwischen dem ersten Verbindungsteil und dem zweiten Verbindungsteil kann es sein, dass die Reihenfolge Control-Pilot-Kontakte, erste und zweite Kontakte, Schutzleiterkontakte eingehalten wird.

In einer Ausführungsform ist es möglich, dass das erste Verbindungsteil ein Stecker und das zweite Verbindungsteil eine Buchse ist. Alternativ dazu ist es ebenfalls denkbar, dass das erste Verbindungsteil eine Buchse und das zweite Verbindungsteil ein Stecker ist. Es ist in diesem Zusammenhang möglich, dass die Buchse den Stecker entlang der Kontaktierungsachse führt. Durch diese Führung, die gleichbedeutend ist mit einer Beschränkung möglicher Freiheitsgrade bei der Bewegung von Stecker und Buchse zueinander, vereinfacht sich die Benutzung der Kontakteinheit, da für eine Bewegung entlang der durch die Beschränkung nicht freigegebenen Freiheitsgrade keine weitere Vorsorge getroffen werden muss.

Es besteht auch die Möglichkeit, dass die Buchse eine bewegbare Abdeckung aufweist. Diese kann dazu dienen, den elektrischen Kontakt der Buchse vor Umwelteinflüssen zu schützen. Umwelteinflüsse können beispielsweise Niederschläge, wie beispielsweise Regen, Tau oder Schnee, sein, oder aber auch Staub oder andere Partikel, die insbesondere in Produktionsanlagen auftreten können. Andere relevante Umwelteinflüsse können aber auch Gase sein oder beispielsweise auch Salze, die in Seeluft auftreten können. Aufgrund eines Hohlraums, den eine Buchse typischerweise definieren und in der Regel zumindest partiell umschließen kann, kann es für den Betrieb wichtig sein, die Buchse vor beispielsweise Ablagerungen resultierend aus den Umwelteinflüssen oder vor Berührung mit diesen zu schützen, beispielsweise durch Abdecken mit einer Abdeckung. Die Abdeckung kann beispielsweise klappbar oder auch verschiebbar mit der Buchse verbunden sein. Die Bewegung der Abdeckung kann beispielsweise mit einem weiteren Aktuator, beispielsweise einem Elektromotor, durchgeführt werden. Prinzipiell besteht aber auch die Möglichkeit, dass die Abdeckung mit einem Vorspannelement angeordnet ist und beispielsweise durch Druck, ausgeübt durch eine Handlung des Benutzers, in eine Öffnungsposition gedrückt wird und mit Hilfe der vom Vorspannelement ausgeübten Kraft zurück in eine Schließposition bewegt wird. Die Abdeckung kann jedoch auch als Deckel ausgeführt sein, der beispielsweise manuell angeordnet werden kann.

Es ist prinzipiell auch denkbar, dass der Hohlraum der Buchse spülbar ausgeführt ist und mit einem Gas gespült wird. Dabei kann es sein, dass beispielsweise, wenn der Hohlraum durch die Abdeckung im Wesentlichen geschlossen ist, im Hohlraum ein Überdruck im Vergleich zum Umgebungsdruck bereitgestellt ist.

In einer Ausführungsform besteht die Möglichkeit, dass das erste Verbindungsteil mit einer Haltevorrichtung verbunden ist, die ausgebildet ist, eine Schnittstelle für eine Positionierung des ersten Verbindungsteils bezüglich des zweiten Verbindungsteils bereitzustellen. Dabei kann es sich beispielsweise um eine manuelle Positionierung handeln. Ebenfalls ist es denkbar, dass die Positionierung maschinell oder maschinell unterstützt und/oder auch durch eine mechanische Vorrichtung unterstützt durchgeführt wird. Die Haltevorrichtung kann beispielsweise einen Handgriff, beispielsweise mit einer Stangenform, aufweisen. Die Haltevorrichtung kann auch vom ersten Verbindungsteil beabstandet sein, beispielsweise mit Hilfe eines Distanzstücks. Auch besteht die Möglichkeit, dass die Haltevorrichtung zumindest partiell um das ersten Verbindungsteil umlaufend angeordnet ist. Es besteht beispielsweise die Möglichkeit, die Haltevorrichtung mit einer oder aber auch mit zwei Händen zu greifen. Die Haltevorrichtung kann auch eine ergonomische Struktur aufweisen, beispielsweise wellenförmig angeordnete Ausnehmungen, die dem Abdruck von Fingern einer Hand nachgebildet sein können. Die Haltevorrichtung kann auch durch eine Ausnehmung im ersten Verbindungsteil realisiert werden. Eine andere Möglichkeit besteht darin, dass die Haltevorrichtung als eine Fläche, beispielsweise mit Gewindebohrungen, ausgeführt ist, an die eine Maschine oder eine mechanische Vorrichtung beispielsweise per Schraubverbindung ankoppelbar ist.

In einer Ausführungsform ist es denkbar, dass das erste und/oder das zweite Verbindungsteil jeweils eine Haltevorrichtung, beispielsweise in einer der oben beschriebenen Ausführungen oder beispielsweise auch als ein Schnappverbinder, aufweist, mit dem das erste und das zweite Verbindungsteil maschinell oder zumindest maschinell unterstützt und/oder auch durch eine mechanische Vorrichtung unterstützt zueinander ausgerichtet werden können. Es ist dann auch möglich, dass das erste Verbindungsteil maschinell oder zumindest maschinell unterstützt und/oder auch durch eine mechanische Vorrichtung unterstützt in die Ruheposition gebracht wird. Dazu kann beispielsweise das erste Verbindungsteil mit einem Tragarm verbunden sein, beispielsweise unter Benutzung der Haltevorrichtung.

Dabei ist es möglich, dass der Tragarm sowohl eine translatorische als auch eine rotatorische Bewegung ausführen kann, beispielsweise in drei, vier oder auch fünf oder mehr Achsen. Es ist auch denkbar, dass der Tragarm mit Hilfe eines Antriebsmotors bewegt wird. Beispielsweise kann der Tragarm auch als Arm eines Roboters ausgeführt sein. Um eine Verbindung zwischen Tragarm und dem ersten Verbindungsteil herzustellen, ist es denkbar, dass das erste Verbindungsteil die Haltevorrichtung umfasst, beispielsweise eine Fläche aufweist, die zum Beispiel eine Flanschfläche sein kann, an die der Tragarm beispielsweise angeschraubt oder angesteckt werden kann. Das erste Verbindungsteil kann als Haltevorrichtung auch eine Ausnehmung aufweisen, in die ein passendes Gegenstück des Tragarms in Eingriff gebracht werden kann. Eine Verbindung zwischen Tragarm und erstem Verbindungsteil kann auch per Schnappverschluss oder Bajonett-Verschluss als Haltevorrichtung herstellbar sein. Es ist auch denkbar, dass der Tragarm einen Greifmechanismus aufweist und das erste Verbindungsteil, beispielsweise an dem Handgriff, greift und führt.

Zur Steuerung der maschinellen und/oder maschinell unterstützten Ausrichtung von erstem und zweitem Verbindungsteil zueinander ist es möglich, dass eine Positionierungssteuerung bereitgestellt wird, die die Bewegung des Tragarms steuert, beispielsweise in dem ein Motor, der eine Bewegung des Tragarms antreibt, mit dazu geeigneten Signalen versorgt wird. Es ist auch denkbar, dass die Positionierungssteuerung mit einem Signal eines Sensors versorgt wird, das indikativ für die Ausrichtung des ersten Verbindungsteils relativ zum zweiten Verbindungsteil ist. Ein solcher Sensor kann beispielsweise ein optischer Sensor sein, wie beispielsweise eine Kamera, oder auch eine Kombination aus Lichtquelle und Lichtsensor, oder ein Abstandssensor wie beispielsweise ein Wirbelstromsensor oder ein Hall-Sensor mit gegenüberliegendem Magneten, oder eine Druckwellenbasierte oder auch eine funkwellenbasierte Lokalisierungsvorrichtung. Es ist auch denkbar, dass das erste und/oder zweite Verbindungsteil mit einer räumlich begrenzten Markierung versehen sind, wobei die Markierung von ihrer Umgebung unterscheidbar ist, beispielsweise in Farbe, Struktur, Oberfläche, Material oder eine Kombination davon oder beispielsweise auch als Vorsprung, Kante oder Ausnehmung oder eine Kombination davon realisiert sein kann.

Es ist ferner möglich, dass das erste Verbindungsteil, beispielsweise der im ersten Verbindungsteil angeordnete elektrische Leiter, elektrisch mit einer elektrischen Energiequelle und das zweite Verbindungsteil, beispielsweise der im zweiten Verbindungsteil angeordnete elektrische Leiter, elektrisch mit einer elektrischen Energiesenke, beispielsweise einem aufladbaren elektrischen Energiespeicher, verbunden sind. Alternativ ist es möglich, dass das erste Verbindungsteil, beispielsweise der im ersten Verbindungsteil angeordnete elektrische Leiter, elektrisch mit der elektrischen Energiesenke, beispielsweise einem aufladbaren elektrischen Energiespeicher und das zweite Verbindungsteil, beispielsweise der im zweiten Verbindungsteil angeordnete elektrische Leiter, elektrisch mit einer elektrischen Energiequelle verbunden ist. Die elektrische Energiequelle kann beispielsweise das elektrische Versorgungsnetz sein, das wiederum selbst eine weitere elektrische Energiequelle, beispielsweise ein Kraftwerk, aufweisen kann. Energiequelle kann aber auch ein Energiespeicher sein, beispielsweise ein Batteriespeicher oder ein aufladbarer Energiespeicher, der auch wieder aufladbar sein kann. Beispielsweise kann das ein Lithium-Ionen-Akkumulator oder auch ein Super-Kondensator (Super-Cap) oder auch ein kohlenstoffbasierter Energiespeicher, beispielsweise auf Graphen-Basis, sein. Der aufladbare elektrische Energiespeicher kann beispielsweise ein Batteriespeicher sein oder ein aufladbarer Energiespeicher, der auch wieder aufladbar sein kann. Beispielsweise kann das ein Lithium-Ionen-Akkumulator oder auch ein Super-Kondensator (Super-Cap) oder auch ein kohlenstoffbasierter Energiespeicher, beispielsweise auf Graphen-Basis, sein. Berühren sich erster elektrischer Kontakt und zweiter elektrischer Kontakt, so dass eine elektrische Verbindung zwischen erstem und zweitem elektrischen Kontakt hergestellt ist, dann kann eine elektrische Verbindung zwischen der elektrischen Energiequelle und der elektrischen Energiesenke, beispielsweise dem elektrisch aufladbaren Energiespeicher, über den elektrischen Leiter im ersten Verbindungsteil, den ersten elektrischen Kontakt, den zweiten elektrischen Kontakt und den elektrischen Leiter im zweiten Verbindungsteil hergestellt werden, so dass elektrische Energie von der Energiequelle zur Energiesenke transportiert werden kann. Es ist auch möglich, dass elektrische Energie in Form von elektrischem Strom von dem Energiespeicher, der dann als Energiequelle dient, in das Versorgungsnetz, das dann eine Energiesenke darstellt, durch die Kontakteinheit geleitet wird, beispielsweise für eine Stabilisierung des elektrischen Versorgungsnetzes oder eines Teils des elektrischen Versorgungsnetzes und/oder, verallgemeinert, für die Bereitstellung einer netzdienlichen Leistung des Energiespeichers. Dafür können das Versorgungsnetz beispielsweise mit dem ersten elektrischen Kontakt und der Energiespeicher mit dem zweiten elektrischen Kontakt elektrisch verbunden sein. Es ist ebenso denkbar, dass beispielsweise das elektrische Versorgungsnetz mit dem zweiten elektrischen Kontakt und der Energiespeicher mit dem ersten elektrischen Kontakt elektrisch verbunden sind.

In einer Ausführungsform kann es sein, dass das erste und/oder das zweite Verbindungsteil eine Temperaturkonditionierung aufweisen. Dabei kann es sein, dass die Temperaturkonditionierung eine Temperatur des ersten und/oder zweiten Verbindungsteils auf eine Temperatur kleiner als 120°C, bevorzugt 90°C, besonders bevorzugt 60°C einstellt.

Mit einem Temperatursensor kann die Temperatur des ersten und/oder zweiten Verbindungsteils erfasst werden. So ist es beispielsweise möglich, den Temperatursensor am oder dicht bei dem ersten und/oder zweiten elektrischen Kontakt anzuordnen.

Die Temperaturkonditionierung ist beispielsweise mit strömender Luft möglich, die in der Kontakteinheit erzeugte Wärme aufnehmen und in eine Umgebung abführen kann. Strömende Luft kann beispielsweise mit einem Lüfter oder Kompressor bereitgestellt werden, der strömende Luft in das erste und/oder zweite Verbindungsteil einbläst, beispielsweise in dafür vorgesehene Lufteintrittsöffnungen. Ebenso ist es denkbar, dass die strömende Luft aus einem Reservoir, beispielsweise einem Druckbehälter, mit einem Druck an den Lufteintrittsöffnungen bereitgestellt wird, so dass die strömende Luft in die Lufteintrittsöffnungen einströmen kann. Es ist ferner möglich, dass, von den Lufteintrittsöffnungen ausgehend, die strömende Luft in der Kontakteinheit mit Hilfe eines Luftführungskanals in der Kontakteinheit, beispielsweise im ersten Verbindungsteil, geleitet wird. Es ist ebenfalls möglich, dass die strömende Luft mit einem Luftverteiler in der Kontakteinheit räumlich verteilt wird. Dabei kann es vorteilhaft sein, wenn die strömende Luft den ersten elektrischen Kontakt und/oder den zweiten elektrischen Kontakt räumlich gleichverteilt erreicht. Die Temperaturkonditionierung kann weiter verbessert werden, wenn die strömende Luft selbst auf eine vorgegebene Temperatur konditioniert ist, beispielsweise 20 °C oder auch auf eine Umgebungstemperatur, die in der Umgebung der Kontakteinheit mit einem weiteren Temperatursensor erfasst werden kann. Es besteht aber auch die Möglichkeit, dass, beispielsweise mit Hilfe eines Kühlmittels, das in einem Kühlmittelkanal, der um den ersten und/oder zweiten elektrischen Kontakt angeordnet ist, strömen kann, Wärmeenergie aus der Kontakteinheit abtransportiert wird. Als Kühlmittel kann beispielsweise Wasser genutzt werden. Um die Menge an zur Kühlung bereitzustellender Luft und/oder bereitzustellendem Kühlmedium in einem Zeitraum zu bestimmen und darauf basierend bereitzustellen, kann es sein, dass ein Signal eines Sensors, beispielsweise eines Temperatursensors, ausgewertet werden muss.

Ein Vorteil, der sich aus der Temperaturkonditionierung ergibt, insbesondere aus einer Kühlung der Kontakteinheit, ist, dass damit ein temperaturabhängiger ohmscher Widerstand, beispielsweise im ersten und/oder zweiten elektrischen Kontakt oder in einem elektrischen Leiter, unterhalb eines vorgegebenen Maximalwertes gehalten kann. Da mit dem ohmschen Widerstand eine innerhalb der Kontakteinheit erzeugte elektrische Verlustleistung verbunden ist, kann somit auch die Verlustleistung und eine damit verbundene Wärmeerzeugung in der Kontakteinheit begrenzt werden. Darüber hinaus kann es sein, dass in der Kontakteinheit verwendete Materialien, beispielsweise wenn sie in einem Isolationssystem verwendet werden, nur bei Temperaturen in einem vorgegebenen Bereich eingesetzt werden dürfen, um eine vorgegebene Isolationsfunktion und Nutzungsdauer gewährleisten zu können. Eine Temperaturkonditionierung kann auch für die Einhaltung eines solchen Temperaturbereiches dienen.

In einer Ausführungsform besteht die Möglichkeit, dass die Kontakteinheit eine Steuereinheit umfasst. Es ist denkbar, dass die Steuereinheit ein Steuersignal zum Herstellen und/oder zum Lösen einer elektrischen Verbindung zwischen dem ersten Verbindungsteil und dem zweiten Verbindungsteil bereitstellt. Ein solches Steuersignal kann beispielsweise den Aktuator betreffen, beispielsweise um den Bewegungsabschnitt relativ zum Fixierungsabschnitt zu bewegen. Dabei ist es beispielsweise möglich, dass die Steuereinheit ein Signal verarbeitet, das indikativ für eine Position des Bewegungsabschnitts relativ zum Fixierungsabschnitt ist. Ein derartiges Signal kann beispielsweise von einem Sensor bereitgestellt werden, wie beispielsweise einem optischen Sensor, einem Magnetsensor, Wirbelstromsensor oder aber auch einem Endlagenschalter, der hier eine sensorische Funktion ausüben kann. Es kann auch sein, dass die Steuereinheit ein Signal verarbeitet, dass indikativ dafür ist, ob sich das erste Verbindungsteil bezüglich des zweiten Verbindungsteils in der Ruheposition befindet.

Darüber hinaus ist auch ein Steuersignal betreffend den Elektromagneten denkbar, beispielsweise um den Elektromagneten in einen aktiven oder inaktiven Zustand zu versetzen. Dies kann beispielsweise damit erfolgen, eine elektrische Stromquelle, die elektrischen Strom für die Spulenwindung des Elektromagneten bereitstellen kann, entsprechend an- oder auszuschalten. Das Steuersignal betreffend den Elektromagneten kann beispielsweise auch abhängig von einem Signal durchgeführt werden, das indikativ für eine Position des Bewegungsabschnitts relativ zum Fixierungsabschnitt ist. Es kann aber auch davon abhängig gemacht sein, ob beispielsweise der erste Control-Pilot-Kontakt und der zweite Control-Pilot-Kontakt einander berühren.

Die Steuereinheit kann beispielsweise als Mikrocontroller ausgeführt sein, der eine Verarbeitungseinheit und einen Speicher aufweist und darüber hinaus eine geeignete Schnittstelle umfasst, die zum Empfang und zum Senden von Signalen, beispielsweise den oben genannten Steuersignalen und/oder Sensorsignalen dienen kann. Die Funktion der Steuereinheit kann beispielsweise durch ein im Speicher abgelegtes Steuerprogramm bestimmt werden. Darüber hinaus ist es beispielsweise auch denkbar, dass eine Funktionalität der Steuereinheit unter Einbeziehen eines FPGA (Field Programmable Gate Array) implementiert ist, wobei eine die Funktionalität bestimmende Konfiguration des FPGA in einem damit verbundenen Speicher abgelegt sein kann.

Die Steuereinheit kann auch die Aufgabe einer Ladezustandsüberwachung ausführen, beispielsweise in der Form, dass, wenn beispielsweise ein zu ladender Batteriespeicher Vollladung aufweist, der Stromfluss beendet wird und die elektrische Verbindung zwischen dem ersten und zweiten Verbindungsteil getrennt wird. Weitere Verwaltungsfunktionen wie beispielsweise Zeit- und Kostenerfassung, Datenerfassung, Identitätsprüfung, Kommunikation, beispielsweise mit einer zentralen Anlagensteuerung oder einem Server, Alarmfunktionen, Fehlererkennung, Temperaturüberwachung und Kühlungssteuerung sind ebenfalls von der Steuereinheit potentiell realisierbare Funktionen. Dazu kann es notwendig sein, dass weitere Sensoren in der Kontakteinheit installiert sind, beispielsweise ein Temperatursensor und/oder ein Zeitsensor, und Signale, die von den weiteren Sensoren erzeugt werden, von der Steuereinheit empfangen und verarbeitet werden.

Die Steuereinheit kann darüber hinaus eine Funktionalität bereitstellen, die eine optionale Benutzerschnittstelle steuert und mit der einem Benutzer eine Möglichkeit für eine Bedienhandlung bereitgestellt wird. Eine solche Benutzerschnittstelle kann beispielsweise ein Anzeigeelement, wie ein Display oder eine Leuchtdiode umfassen, und/oder auch Schalter, Taster oder Tasten, Touchpad oder andere denkbare Eingabevorrichtungen, mit denen der Benutzer die Kontakteinheit bedienen kann.

In einer Ausführungsform besteht die Möglichkeit, dass die Kontakteinheit einen Verpolschutz aufweist. Verpolschutz bedeutet, dass mittels einer konstruktiven Maßnahme und/oder eines implementierten Prüfverfahrens verhindert wird, dass das erste Verbindungsteil und das zweite Verbindungsteil zueinander in beliebiger Weise ausgerichtet sind, insbesondere dann, wenn erster und zweiter elektrischer Kontakt einander berühren und/oder sich in unmittelbarer Nachbarschaft zueinander befinden, beispielsweise während des Herstellens einer elektrisch leitendenden Verbindung zwischen erstem elektrischen Kontakt und zweitem elektrischen Kontakt und/oder während des Trennens einer elektrisch leitenden Verbindung zwischen erstem elektrischen Kontakt und zweitem elektrischen Kontakt.

Der Verpolschutz ist ausgebildet, eine Vielzahl möglicher elektrischer Verbindungskonfigurationen des ersten elektrischen Kontakts mit dem zweiten elektrischen Kontakt und/oder des ersten Schutzleiterkontakts mit dem zweiten Schutzleiterkontakt und/oder des ersten Control-Pilot-Kontakts mit dem zweiten Control-Pilot-Kontakt auf eine vordefinierte Anzahl zu begrenzen, beispielsweise auf genau eine mögliche Verbindungskonfiguration oder beispielsweise genau zwei mögliche Verbindungskonfigurationen. Ein Verpolschutz besitzt dabei den Vorteil, dass, beispielsweise bei elektrischen Verbindungen, bei denen ein Gleichstrom und/oder eine Gleichspannung verwendet wird, keine nicht vorgesehenen elektrischen Verbindungen zustande kommen, die in einem solchen Fall zu einem Fehlerstrom und/oder auch zu einer Beschädigung der Kontakteinheit und/oder angeschlossener Komponenten führen können oder sogar zu einer Verletzung eines Benutzers.

In einer Ausführungsform ist ein solcher Verpolschutz denkbar, bei dem beispielsweise das erste Verbindungsteil zumindest in einem Abschnitt eine äußere Form aufweist, die zu einer äußeren Komplementärform zumindest eines Abschnitts des zweiten Verbindungsteils im Wesentlichen komplementär ist, wobei Form und Komplementärform ausgebildet sind, miteinander in Eingriff zu stehen und durch den Eingriff die Anordnung des ersten Verbindungsteils bezüglich des zweiten Verbindungsteils vorzugeben.

Eine weitere Möglichkeit für die Ausführung des Verpolschutzes besteht beispielsweise darin, den ersten elektrischen Kontakt und den zweiten elektrischen Kontakt am ersten beziehungsweise zweiten Verbindungsteil jeweils so anzuordnen, dass sich erster elektrischer Kontakt und zweiter elektrischer Kontakt beispielsweise nur dann und in der vorgegebenen Verbindungskonfiguration berühren können, wenn erstes und zweites Verbindungsteil zueinander in einer dazu entsprechenden Weise ausgerichtet sind, beispielsweise indem eine zur Kontaktierungsachse unsymmetrische Anordnung der jeweiligen Kontakte gewählt wird. Diese Art und Weise der Kontaktanordnung kann auf analoge Weise zusätzlich oder alternativ auch unter Verwendung von erstem und zweitem Schutzleiterkontakt und/oder auch erstem und zweitem Control-Pilot-Kontakt bereitgestellt werden.

Es besteht dann beispielsweise die Möglichkeit, dass, wenn der erste Schutzleiterkontakt und der zweite Schutzleiterkontakt einander berühren, beispielsweise mit Hilfe eines in der Steuereinheit abgelegten Steuerprogramms, geprüft wird, ob und/oder welche elektrischen Verbindungen zwischen dem ersten Schutzleiterkontakt und dem zweiten Schutzleiterkontakt bestehen, beispielsweise durch ein Erfassen und ein Auswerten eines möglichen elektrischen Stromflusses zwischen erstem und zweitem Schutzleiterkontakt. Eine derartige Prüfung kann auf analoge Weise zusätzlich oder alternativ auch unter Verwendung von erstem und zweitem elektrischen Kontakt und/oder auch erstem und zweitem Control-Pilot-Kontakt durchgeführt werden. Auf Basis des Prüfungsergebnisses kann beispielsweise entschieden werden, ob eine Energieübertragung durch die Kontakteinheit erfolgen kann oder nicht.

Eine Verwendung der Kontakteinheit ist beispielsweise beim Wiederaufladen eines Batteriespeichers eines batterieelektrisch betriebenen Fahrzeugs möglich.

Es wird auch ein Verfahren zum Betreiben einer Kontakteinheit offenbart. Das Verfahren kann dabei auch das Herstellen einer Hochstromverbindung zum Wiederaufladen eines Batteriespeichers eines batterieelektrisch betriebenen Fahrzeugs betreffen. Beispielsweise kann das Verfahren unter Verwenden einer oben beschriebenen Kontakteinheit durchgeführt werden. Die in Bezug auf die Kontakteinheit beschriebenen Merkmale sind insofern auch auf das Verfahren anwendbar wie auch umgekehrt die Merkmale des Verfahrens auf die Kontakteinheit anwendbar sind.

Das offenbarte Verfahren umfasst die Schritte:
- Anordnen eines ersten Verbindungsteils mit einem ersten elektrischen Kontakt und eines zweiten Verbindungsteils mit einem zweiten elektrischen Kontakt, so dass das erste Verbindungsteil und das zweite Verbindungsteil zueinander entlang einer Kontaktierungsachse, die in einer Kontaktierungsrichtung verläuft, bewegbar sind, wobei das erste Verbindungsteil gegenüber dem zweiten Verbindungsteil so entlang der Kontaktierungsachse positionierbar ist, dass ein erster Abschnitt des ersten Verbindungsteils gegenüber dem zweiten Verbindungsteil in einer Ruheposition zu liegen kommt;
- Positionieren eines ersten Abschnitts des ersten Verbindungsteils relativ zum zweiten Verbindungsteil in der Ruheposition;
- Verschieben eines zweiten Abschnitts des ersten Verbindungsteils in Kontaktierungsrichtung relativ zum ersten Abschnitt, so dass der zweite Abschnitt des ersten Verbindungsteils und der zweite Verbindungsteil in Kontaktierungsrichtung aneinander liegen sowie der erste elektrische Kontakt und der zweite elektrische Kontakt einander berühren;
- Bewegen eines Verriegelungselements in eine Verriegelungsposition, in der es eine Bewegung des ersten Abschnitts des ersten Verbindungsteils relativ zum zweiten Verbindungsteil verhindert und eine Bewegung des zweiten Abschnitts des ersten Verbindungsteils relativ zum ersten Abschnitt des ersten Verbindungsteils zulässt; und
- Bewegen des Verriegelungselements in eine Entriegelungsposition, in der es eine Bewegung des ersten Abschnitts des ersten Verbindungsteils relativ zum zweiten Verbindungsteil gestattet und eine Bewegung des zweiten Abschnitts des ersten Verbindungsteils relativ zum ersten Abschnitt des ersten Verbindungsteils verhindert.

Das offenbarte Verfahren kann ferner einen oder mehrere der Schritte umfassen:
- Aktivieren eines Elektromagneten;
- Deaktivieren eines Elektromagneten;

Desweiteren kann das offenbarte Verfahren auch einen oder mehrere der folgenden Schritte umfassen:
- Bewegen des zweiten elektrischen Kontaktes durch Bewegen eines dazu kinematisch gekoppelten Kontaktschutzrückstellers;
- Bereitstellen einer Kontaktraft zwischen dem ersten und dem zweiten elektrischen Kontakt;
- Öffnen einer Abdeckung
- Schließen einer Abdeckung.

Ebenso können einer oder mehrere der folgenden Schritte Teil des Verfahrens sein:
- Verbinden des ersten Verbindungsteils mit einer Energiequelle;
- Verbinden des zweiten Verbindungsteils mit einer Energiequelle;
- Verbinden des ersten Verbindungsteils mit einem Energiespeicher;
- Verbinden des zweiten Verbindungsteils mit einem Energiespeicher. Weitere potentielle Verfahrensschritte umfassen:
- Konditionieren der Temperatur der Kontakteinheit;
- Bereitstellen eines Steuersignals;
- Verarbeiten eines Sensorsignals;
- Bereitstellen eines Kommunikationssignals;
- Verarbeiten eines Kommunikationssignals.

Eine mögliche Anwendung der elektrischen Kontakteinheit besteht darin, eine elektrisch leitende Verbindung, kurz elektrische Verbindung, herzustellen. Die elektrische Verbindung kann zur Leitung eines elektrischen Stroms genutzt werden. Die elektrische Verbindung kann eine Hochstromverbindung sein, wobei Hochstromverbindung die Möglichkeit zur Leitung eines hohen elektrischen Stroms umfasst.

Die elektrische Kontakteinheit kann zur Herstellung einer elektrischen Verbindung zwischen einer elektrischen Energiequelle und einem elektrischen Batteriespeicher, kurz Batteriespeicher, dienen. Der Batteriespeicher ist ausgebildet, elektrische Energie zu speichern. Der Batteriespeicher kann wiederaufladbar sein. Der Batteriespeicher kann Energie für ein Fahrzeug bereitstellen. Das Fahrzeug kann batterieelektrisch betrieben sein. Das heißt, das Fahrzeug oder Komponenten des Fahrzeugs können mit vom Batteriespeicher bereitgestellter Energie betrieben werden.

Das Fahrzeug umfasst motorisch betriebene Fortbewegungsmittel zu Land, zu Wasser und in der Luft sowie im Weltraum, beispielsweise Autos, Schiffe und Flugzeuge sowie Raumfahrzeuge. Dies können beispielsweise auch motorisch betriebene, auf Bewegung ausgerichtete, Anlagen sein, die in manchen Industriebetrieben zu finden sind, beispielsweise Krananlagen, Förderbänder oder andere industrielle Transportsysteme. Es ist dabei denkbar, dass ein Fahrzeug mit menschlicher Interaktion aber auch ohne menschliche Interaktion, also autonom, betrieben oder von einer Steuerung gesteuert wird.

Die elektrische Kontakteinheit ist ferner auch in nicht primär auf Fortbewegung ausgerichteten Anlagen anwendbar, beispielsweise an einem elektrischen Energiespeicher, der jedoch sowohl für stationären als auch mobilen Betrieb vorgesehen sein kann. Eine Anwendung ohne Energiespeicher ist ebenfalls denkbar, wobei es in einer solchen Anwendung darauf ankommen kann, eine Verbindung zwischen einer elektrischen Energiequelle und einer elektrischen Energiesenke herzustellen.

Bevorzugt ist jedoch die Anwendung der elektrischen Kontakteinheit zum Herstellen einer Hochstromverbindung. Die Hochstromverbindung kann beispielsweise zum Wiederaufladen eines Batteriespeichers eines batterieelektrisch betriebenen Fahrzeugs genutzt werden.

Im Folgenden werden anhand von Figuren Ausführungsbeispiele gezeigt und nachfolgend erläutert. Dabei zeigt:
Fig. 1: eine schematische Darstellung der Kontakteinheit;
Fig. 2a bis 2d: jeweils eine schematische Darstellung eines als Stecker ausgeführten ersten Verbindungsteils;
Fig. 3a bis 3f: jeweils eine schematische Darstellung eines als Buchse ausgeführten zweiten Verbindungsteils;
Fig. 4a bis 4d: jeweils eine schematische Darstellung des ersten und des zweiten Verbindungsteils in verschiedenen Positionen zueinander;
Fig. 5a bis 5d: jeweils eine schematische Darstellung des ersten und des zweiten Verbindungsteils in verschiedenen Positionen zueinander;
Fig. 6a bis 6b: jeweils eine schematische Darstellung eines Spannelements;
Fig. 6c bis 6d: jeweils eine schematische Darstellung einer kinematischen Kopplung zwischen dem Spannelement und einem Verriegelungselement;
Fig. 7a bis 7b: jeweils eine schematische Darstellung einer Sperrung und einer Entsperrung eines zweiten Abschnitts des ersten Verbindungsteils;
Fig. 8a bis 8c: jeweils eine schematische Darstellung des ersten und des zweiten Verbindungsteils bei Herstellung einer elektrischen Verbindung zwischen dem ersten und dem zweiten Verbindungsteil;
Fig. 9a bis 9b: jeweils eine schematische Darstellung einer kinematischen Kopplung zwischen einem Kontaktrücksteller und einem zweiten elektrischen Kontakt.
Fig. 10a bis 10c: jeweils eine schematische Darstellung einer Luftführung zur Temperaturkonditionierung;
Fig. 11a bis 11b: jeweils eine schematische Darstellung einer alternativen Luftführung zur Temperaturkonditionierung;
Fig. 12a bis 12b: jeweils eine schematische Darstellung der alternativen Luftführung zur Temperaturkonditionierung mit erstem und zweitem Verbindungsteil.

Wiederkehrende Elemente in den Figuren sind mit identischen Bezugszeichen versehen und sind teilweise weggelassen, insbesondere wenn bezogen auf eine bestimmte Zeichnung nicht Bezug auf diese Elemente genommen wird. Es versteht sich ferner, dass die gezeigten Ausführungsbeispiele lediglich Möglichkeiten darstellen, die offenbarten erfinderischen Gedanken zu implementieren und keiner Weise einschränkende Wirkung besitzen. Alle Abbildungen umfassen lediglich schematische Darstellungen, auch wenn nicht immer explizit darauf hingewiesen wird. Dabei können Details, auf die im Rahmen der Erläuterung nicht eingegangen wird, in einzelnen Darstellungen weggelassen sein. Die Figuren umfassen darüber hinaus lediglich Darstellungen, für die angenommen wird, dass es sich bei dem ersten Verbindungsteil um einen Stecker und bei dem zweiten Verbindungsteil um eine Buchse handelt. Die gezeigten Prinzipien sind jedoch auch in einer analogen Weise auf den Fall übertragbar, dass es sich beim ersten Verbindungsteil um eine Buchse handelt und beim zweiten Verbindungsteil um einen Stecker.

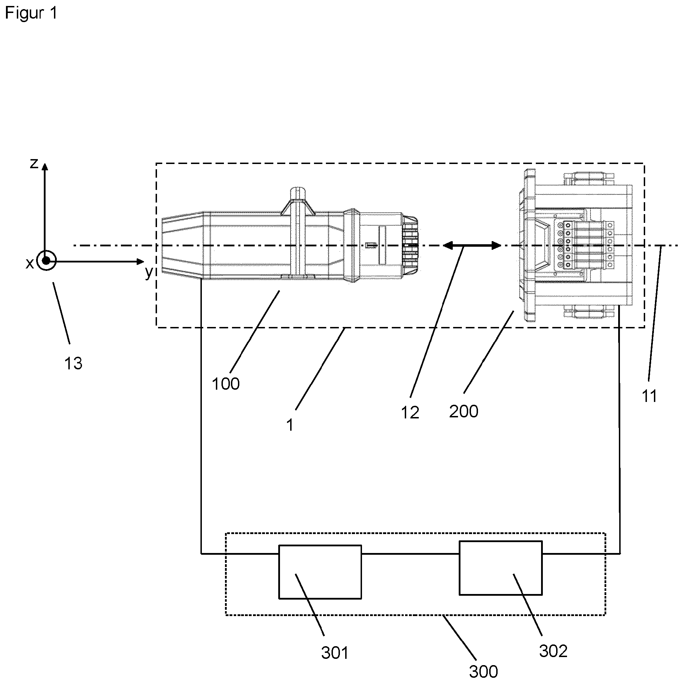

Figur 1 zeigt eine Kontakteinheit 1. Sie umfasst ein erstes Verbindungsteil 100 und ein zweites Verbindungsteil 200. Beide Verbindungsteile 100, 200 sind so an einer Kontaktierungsachse 11 angeordnet und an dieser ausgerichtet, dass sie in einer Kontaktierungsrichtung 12, die in Richtung der Kontaktierungsachse 11 verläuft, relativ zueinander verschiebbar sind. In Figur 1 ist das erste Verbindungsteil 100 so bezüglich der Kontaktierungsachse 11 angeordnet, dass die Kontaktierungsachse 11 durch einen zentralen Punkt des ersten Verbindungsteils 100 hindurch läuft. Ebenfalls ist das zweite Verbindungsteil 200 so bezüglich der Kontaktierungsachse 11 angeordnet ist, dass die Kontaktierungsachse 11 durch einen zentralen Punkt des zweiten Verbindungsteils 200 hindurch läuft.

Ferner ist in Figur 1 ein kartesisches Koordinatensystem 13 gezeigt, dass jeweils eine Koordinatenachse in eine x-Richtung, eine y-Richtung und eine z-Richtung aufweist, wobei die Koordinatenachse in y-Richtung parallel zur Kontaktierungsachse 11 ausgerichtet ist. Beim Betrieb der Kontakteinheit 1 kann das erste Verbindungsteil 100 zumindest teilweise in das zweite Verbindungsteil 200 eingeschoben werden, wobei die Verschiebungsrichtung beim Einschieben der positiven y-Richtung entspricht. Ein Trennen von erstem Verbindungsteil 100 und zweitem Verbindungsteil 200 erfolgt entsprechend durch Verschieben des ersten Verbindungsteils 100 relativ zum zweiten Verbindungsteil 200 in negative y-Richtung. Das Verschieben des ersten Verbindungsteils 100 relativ zum zweiten Verbindungsteil 200 kann durch Bewegen des ersten Verbindungsteils 100 und/oder des zweiten Verbindungsteils 200 erfolgen.

Figur 1 zeigt des Weiteren eine Steuereinheit 300. Die Steuereinheit 300 kann beispielsweise ein Mikrocontroller sein, eine speicherprogrammierbare Steuerung, ein Computer, ein FPGA oder auch eine elektronische Schaltung. Die Steuereinheit 300 kann als eine Steuereinheit 300 ausgeführt sein. Es besteht aber auch die Möglichkeit, dass die Steuereinheit 300 beispielsweise, wie in Figur 1 dargestellt, mehrere Steuereinheiten umfasst, beispielsweise eine erste Steuereinheit 301 und eine zweite Steuereinheit 302. Die erste Steuereinheit 301 und die zweite Steuereinheit 302 können kommunizierend, beispielsweise elektrisch miteinander verbunden sein. Im in Figur 1 gezeigten Beispiel kann die erste Steuereinheit 301 mit dem ersten Verbindungsteil 100 in kommunizierender Verbindung sein. Dazu kann sie außerhalb, aber auch innerhalb des ersten Verbindungsteils 100 angeordnet sein. Beispielsweise kann die erste Steuereinheit 301 als eine Steuereinheit einer Ladesäule ausgeführt sein. Im in Figur 1 gezeigten Beispiel kann die zweite Steuereinheit 302 mit dem zweiten Verbindungsteil 200 in kommunizierender Verbindung sein. Dazu kann sie außerhalb, aber auch innerhalb des zweiten Verbindungsteils 200 angeordnet sein. Beispielsweise kann die zweite Steuereinheit 302 als Steuergerät eines Fahrzeugs ausgeführt sein. Die Kommunikation zwischen der ersten Steuereinheit 301 und der zweiten Steuereinheit 302 kann beispielsweise über eine elektrische Verbindung hergestellt sein, die eine über einen ersten Control-Pilot-Kontakt 123 und einen zweiten Control-Pilot-Kontakt 213 hergestellte elektrische Verbindung umfasst. Es ist auch möglich, dass die erste Steuereinheit 301 und die zweite Steuereinheit 302 über eine Funkverbindung miteinander kommunizieren. Es ist ferner denkbar, dass die erste und die zweite Steuereinheit 301, 302 voneinander unabhängig Aufgaben ausführen können.

Die Steuereinheit 300 kann dazu genutzt werden, Steuersignale an das erste Verbindungsteil 100 und/oder zweite Verbindungsteil 200 auszugeben, beispielsweise zur Ansteuerung eines Aktuatorantriebs 141 (in Figur 1 nicht dargestellt) oder auch um Signale zu empfangen, beispielsweise ein Schaltsignal eines Bedienelements 126 (in Figur 1 nicht dargestellt), das beispielsweise ein Schalter, Taster oder auch ein Touchpad sein kann, oder ein Sensorsignal, beispielsweise eines Endlagensensors, wie beispielsweise eines Mikrotasters, eines Hall-Sensors oder auch eines Abstandssensors. Andere Signale können eine Position des Aktuatorantriebs 141 aber auch eine Temperatur, beispielsweise in der Umgebung der Kontakteinheit 1 und/oder innerhalb der Kontakteinheit 1, betreffen. Signale können mit Hilfe der Control-Pilot-Kontakte 123, 223 (in Figur 1 nicht dargestellt) übertragene Signale sein. Die Steuereinheit 300 kann eine Nutzerschnittstelle zur Verfügung stellen, über die die Kontakteinheit 1 bedient werden kann. Sie kann auch dazu dienen, einen Ladevorgang zu steuern und zu überwachen, beispielsweise ob Betriebsgrenzen, beispielsweise bezüglich der Temperatur oder einer Stromstärke, eingehalten werden. Mit der Steuereinheit kann ein Betrieb der Kontakteinheit 1 automatisiert werden, beispielsweise indem ein Verfahren zum Betrieb der Kontakteinheit 1 als Programm in der Steuereinheit 300 ausgeführt wird. Ein solches Verfahren kann beispielsweise einen oder mehrere Schritte umfassen, wie beispielsweise Auswerten eines Sensorsignals, Bereitstellen eines Steuersignals für den Aktuatorantrieb 141, Aktivieren eines Elektromagneten 124, Deaktivieren des Elektromagneten 124, Verbinden des ersten Verbindungsteils 100 mit einer Energiequelle, Verbinden des zweiten Verbindungsteils 200 mit einer Energiequelle, Verbinden des ersten Verbindungsteils 100 mit einem Energiespeicher, Verbinden des zweiten Verbindungsteils 200 mit einem Energiespeicher, Öffnen einer Abdeckung, Schließen einer Abdeckung, Bereitstellen eines Kommunikationssignals, Verarbeiten eines Kommunikationssignals. Die Steuereinheit 300 kann ferner eine Schnittstelle zur Kommunikation aufweisen. Es ist vorstellbar, dass die Steuereinheit 300 über die Schnittstelle zur Kommunikation Daten und/oder Steuersignale empfängt. Es ist auf diese Weise auch möglich, dass die Steuereinheit 300 fernsteuerbar ausgeführt ist. Es ist auch möglich, dass das Programm der Steuereinheit 300 über die Schnittstelle zur Kommunikation verändert wird.

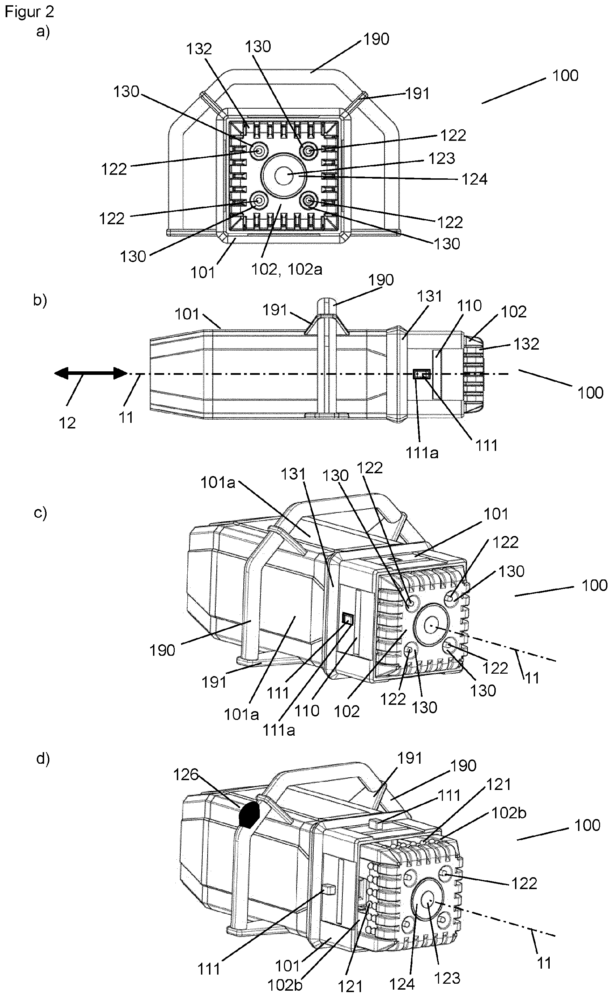

Die Figuren 2a bis 2d zeigen jeweils eine schematische Darstellung eines als Stecker 100 ausgeführten ersten Verbindungsteils 100.

Das erste Verbindungsteil 100 in Figur 2a weist einen ersten Abschnitt 101 und einen zweiten Abschnitt 102 auf. Insbesondere ist in dieser Darstellung eine Fläche 102a des zweiten Abschnitts 102 sichtbar, die eine Stirnfläche 102a des zweiten Abschnitts 102 darstellt und die im Wesentlichen senkrecht zu einer Kontaktierungsrichtung 12 ausgerichtet ist. An dieser Stirnfläche 102a sind erste Schutzleiterkontakte 122 angeordnet, ein Elektromagnet 124 sowie der erste Control-Pilot-Kontakt 123. Die Stirnfläche 102a weist Vertiefungen 130 auf, aus denen die ersten Schutzleiterkontakte 122, beispielsweise senkrecht zur Stirnfläche 102a, hervorragen. Die ersten Schutzleiterkontakte 122 besitzen in diesem Beispiel eine im Wesentlichen zylindrische Gestalt. Ferner sind Vorsprünge 132 sichtbar, hinter denen (in dieser Figur durch die Vorsprünge 132 verdeckt) ein erster elektrischer Kontakt 121 angeordnet. Damit ist ein direktes Berühren des ersten elektrischen Kontaktes 121 erschwert. Der zweite Abschnitt 102 ist so gestaltet, dass er an Flächen, die nicht die Stirnfläche 102a sind, zumindest teilweise vom ersten Abschnitt 101 umgeben ist, innerhalb des ersten Abschnitts 101 beweglich ist und ferner so geformt ist, dass der erste Abschnitt 101 den zweiten Abschnitt 102 bei einer Bewegung in Kontaktierungsrichtung 12 führen kann.

In Figur 2a ist ferner eine Haltevorrichtung 190 zu sehen, die mit Hilfe von mehreren Distanzstücken 191 am ersten Abschnitt 101 befestigt ist. Die Haltevorrichtung 190 weist abschnittsweise eine Stangenform auf und ist zumindest teilweise umlaufend um den ersten Abschnitt 101 ausgeführt. Diese Gestaltung ist vorteilhaft, da eine Stangenform von einer menschlichen Hand umgreifbar ist und somit eine einfache Handhabung des ersten Verbindungsteils 100 ermöglicht wird. Die Umgreifbarkeit der Haltevorrichtung 190 wird dadurch unterstützt, dass durch die Nutzung von Distanzstücken 191, die eine im Wesentlichen starre Verbindung zwischen Haltevorrichtung 190 und erstem Abschnitt 101 herstellen, ein Zwischenraum zwischen erstem Abschnitt 101 und Haltevorrichtung 190 ausgebildet ist. Es ist andererseits auch klar, dass in anderen Ausführungsformen eine Haltevorrichtung 190 auf andere Weise, beispielsweise durch eine Vertiefung im ersten Abschnitt 101, realisiert werden kann.

Figur 2b zeigt das ersten Verbindungsteil 100 von Figur 2a in einer Seitenansicht. Zu sehen ist die Kontaktierungsachse 11, die entlang der Kontaktierungsrichtung 12 verläuft. Darüber hinaus sind eine Anschlagkante 131, ein Verriegelungselement 111 und eine Arretierungsausnehmung 110 dargestellt. Die Anschlagkante 131, das Verriegelungselement 111, die Verriegelungsausnehmung 111a und die Arretierungsausnehmung 110 sind ausgebildet, eine Positionierung des ersten Verbindungsteils 100 mit Bezug auf das zweite Verbindungsteil 200 vorzugeben. Die Anschlagkante 131 kann auch als Dichtelement dienen. Sie kann beispielsweise aus einem dichtenden Werkstoff wie beispielsweise Gummi gefertigt sein. Der zweite Abschnitt 102 ist in dieser Figur zumindest teilweise vom ersten Abschnitt 101 so umschlossen, dass die Stirnfläche 102a sich außerhalb des vom ersten Abschnitt 101 umschlossenen Bereichs befindet. Dabei befindet sich der zweite Abschnitt 102 in dieser Darstellung in einer Position, bei dem der erste elektrische Kontakt 121, der am zweiten Abschnitt 102 angeordnet ist, vom ersten Abschnitt 101 verdeckt ist, wodurch eine manuelle Berührung des ersten elektrischen Kontaktes 121 durch einen möglichen Benutzer zumindest erschwert wird. In der dargestellten Ausführung ragen die ersten Schutzleiterkontakte 122 nicht über die Stirnfläche 102a des zweiten Abschnitts 102 hinaus.

Figur 2c zeigt eine isometrische Darstellung des ersten Verbindungsteils 100 aus den Figuren 2a und 2b. Dabei sind mehrere Seitenflächen 101a des ersten Abschnitts 101 sichtbar und es ist festzustellen, dass an jeder der Seitenflächen 101a jeweils die Verriegelungsausnehmung 111a für ein Verriegelungselement 111 sowie eine Arretierungsausnehmung 110 angeordnet sind. Der zweite Abschnitt 102 befindet sich in dieser Darstellung in einer Sperrposition, in der eine Bewegung des zweiten Abschnitts 102 bezüglich des ersten Abschnitts 101 verhindert wird. In der Sperrposition ist beispielsweise eine Bewegung des ersten Verbindungsteils 100 möglich, ohne dass sich der erste Abschnitt 101 und der zweite Abschnitt 102 ungewollt zueinander bewegen und dadurch beispielsweise eine Situation entsteht, in der der erste Abschnitt 101 den ersten elektrischen Kontakt 121 nicht verdeckt.

Figur 2d zeigt die isometrische Darstellung des ersten Verbindungsteils 100 aus Figur 2c in einer Situation, in der sich der zweite Abschnitt 102 nicht in der Sperrposition, sondern in einer Entsperrposition befindet. Der zweite Abschnitt 102 steht von dem ersten Abschnitt 101 so vor, dass der erste elektrische Kontakt 121 vom ersten Abschnitt 101 nicht verdeckt wird. Der erste elektrische Kontakt 121 ist dabei an jeder der Seitenflächen 102b des zweiten Abschnitts 102 angeordnet. Der erste elektrische Kontakt 121 weist eine ausgedehnte Form, hier, aber nicht notwendigerweise, mit einer rechteckigen Grundfläche sowie noppenförmigen Vorsprüngen auf, wobei die noppenförmigen Vorsprünge an einem Ende eine gewölbte Form aufweisen, beispielsweise in Form einer Halbkugel. Diese Wölbung gestattet einen Kontaktierungsvorgang, bei dem im Vergleich zu einer eher kantigen Form ein besseres Gleiten möglich ist. Darüber hinaus ist die Qualität einer elektrischen Verbindung, die mit diesem Kontakt hergestellt werden kann, besser vorhersagbar und reproduzierbar. Für die Herstellung einer elektrischen Verbindung umfasst der erste elektrische Kontakt 121 ein elektrisch leitfähiges Material, beispielsweise Kupfer, Aluminium, einen kohlenstoffbasierten elektrischen Leiter, eine metallische Legierung oder Gleichwertiges.

In Figur 2d ist das Verriegelungselement 111 in einer Verriegelungsposition dargestellt. Es ist auch zu sehen, dass das Verriegelungselement 111 an jeder der Seitenflächen 101a des ersten Abschnitts 101 bzw. der Seitenflächen 102b des zweiten Abschnitts 102 angeordnet ist. Dadurch ist eine gleichmäßige Verriegelung möglich und somit auch eine, damit verbundene, gleichmäßige Verteilung einer Kraft am ersten Verbindungsteil 100, die zum Halten des ersten Verbindungsteils 100 in einer Position notwendig werden kann. Zusätzlich zu den vorherigen Figuren ist in Figur 2d ein Bedienelement 126, beispielsweise ein Schalter oder Taster, eingetragen, mit dem Bedienhandlungen vorgenommen werden können, beispielsweise um die Herstellung einer elektrischen Verbindung zwischen dem ersten Verbindungsteil 100 und dem zweiten Verbindungsteil 200 zu initiieren. Dieses Bedienelement 126 kann beispielsweise an der Haltevorrichtung 190 befestigt sein. Alternativ dazu oder gleichfalls kann das Bedienelement 126 auch in einer anderen geeigneten Position am ersten und/oder zweiten Verbindungsteil 100, 200 befestigt sein oder auch an einer hier nicht eingezeichneten Bedieneinheit oder einer Steuereinheit, mit der auch automatisierte Bedienhandlungen und/oder Schalthandlungen möglich sein können.

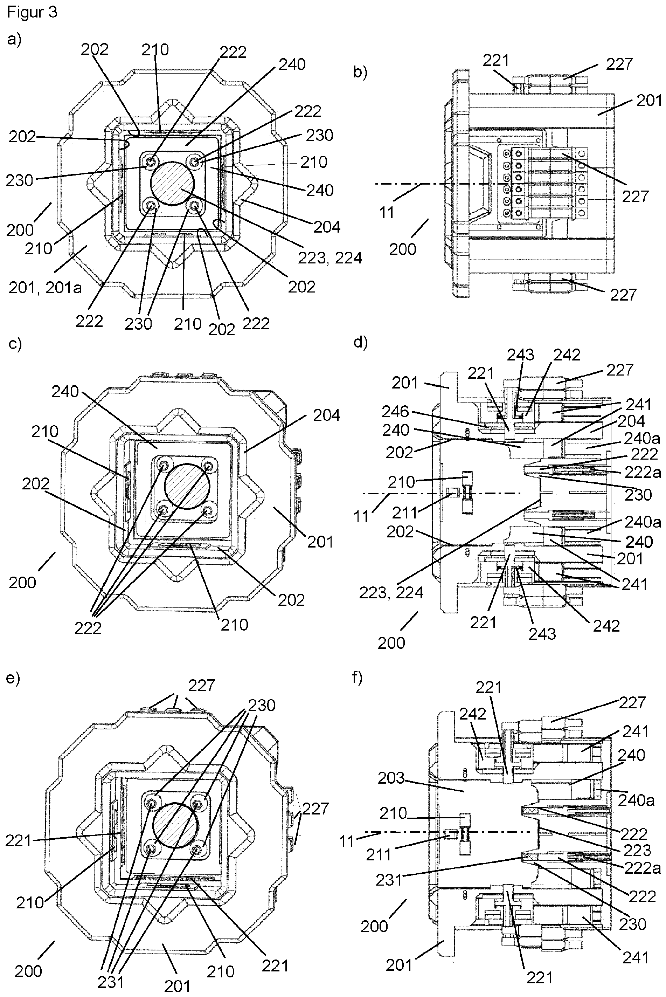

Die Figuren 3a bis 3f zeigen eine schematische Darstellung eines als Buchse 200 ausgeführten zweiten Verbindungsteils 200. Das zweite Verbindungsteil 200 kann so ausgeführt sein, dass sie mit dem ersten Verbindungsteil 100 in den Figuren 2a bis 2d zusammenwirken kann. Das erste Verbindungsteil 100 und das zweite Verbindungsteil 200 können dann so ausgestaltet sein, dass sie eine, zumindest teilweise zueinander komplementäre Form aufweisen und dass beispielsweise, zumindest teilweise, das erste Verbindungsteil 100 in einen durch das zweite Verbindungsteil 200 definierten Hohlraum 203 oder aus diesem heraus verschoben werden kann. Es ist dann möglich, dass das erste Verbindungsteil 100 von einer Berandung des zweiten Verbindungsteils 200 beim Verschieben geführt wird.

Figur 3a zeigt das zweite Verbindungsteil 200 in einer Stirnansicht. Sichtbar ist eine Stirnfläche 201a auf der ein Dichtelement 204 angeordnet ist. Im Weiteren sind vier Seitenflächen 202 des zweiten Verbindungsteils 200 eingetragen sowie eine innere Begrenzung, die Flächen eines Kontaktrückstellers 240 und eines Magnetgegenelements 224 umfasst, sichtbar. Die Stirnfläche 201a und die innere Begrenzung sind im Wesentlichen senkrecht zur Kontaktierungsachse 11 (in Figur 3a nicht eingetragen) ausgerichtet, die in Kontaktierungsrichtung 12 verläuft (in Figur 3a nicht eingetragen). Die Seitenflächen 202 sind so angeordnet, dass sie im Wesentlichen parallel zur Kontaktierungsachse 11 verlaufen. In einer alternativen Ausführung wäre auch eine Anordnung der Seitenflächen 202 denkbar, bei der gegenüberliegende Seitenflächen 202 nicht zueinander parallel ausgerichtet sind, sondern beispielsweise konisch aufeinander zulaufen. Die Seitenflächen 101a des ersten Abschnitts 101 des ersten Verbindungsteils 100 und/oder die Seitenflächen 102b des zweiten Abschnitts 102 des ersten Verbindungsteils 100 können im Wesentlichen parallel zu den Seitenflächen 202 des zweiten Verbindungsteils ausgerichtet sein. Damit kann ein Zusammenwirken von erstem und zweitem Verbindungsteil 100, 200 ermöglicht werden.

Die Ebene der Stirnfläche 201a, die innere Begrenzung sowie die Seitenflächen 202 des zweiten Verbindungsteils definieren den Hohlraum 203 des zweiten Verbindungsteils. In der dargestellten Form weist dieser Hohlraum 203 eine im Wesentlichen quaderförmige Gestalt auf, die auch als eine zylinderförmige Gestalt mit einer quadratischen oder allgemein rechteckigen Grundfläche angesehen werden kann. Es ist auch denkbar, dass der Hohlraum 203 eine zylinderförmige Gestalt aufweist, bei der die Grundfläche nicht rechteckig ist. Beispielsweise ist eine Grundfläche mit drei oder auch fünf oder mehr Ecken, die auch abgerundet oder gefast sein können, denkbar oder beispielsweise eine nicht geradlinige Begrenzung der Grundfläche. Die Seitenflächen 202 des zweiten Verbindungsteils 200 sind in ihrer geometrischen Gestalt dann an die Grundfläche so anzupassen, dass eine entsprechende zylindrische Gestalt entsteht. Über die Zylinderform hinausgehend ist auch eine, beispielsweise konische, Verjüngung des Hohlraums 203 entlang der Kontaktierungsachse 11 vorstellbar. Das erste Verbindungsteil 100 kann dann auch eine von der in den Figur 2a bis 2d dargestellten Form insofern abweichende Gestalt aufweisen, dass seine Flächen 101a, 102b so in Dimension und Ausrichtung an den Hohlraum 203 des zweiten Verbindungsteils angepasst sind, dass das erste Verbindungsteil 100, zumindest teilweise, in den Hohlraum 203 des zweiten Verbindungsteils 200 eingeschoben werden kann.

In Figur 3a sind darüber hinaus an der inneren Begrenzung angeordnete zweite Schutzleiterkontakte 222 sichtbar, die jeweils an einem Vorsprung 230 positioniert sind. Die dargestellten Vorsprünge 230 können so ausgerichtet sein, dass sie den Ausnehmungen 130 des ersten Verbindungsteils 100, wenn das erste Verbindungsteil 100 in den Hohlraum 203 des zweiten Verbindungsteils 200 eingeschoben ist, gegenüberstehen und mit diesen in Eingriff gebracht werden können. Die Ausnehmungen 130 des ersten Verbindungsteils 100 und die Vorsprünge 230 des zweiten Verbindungsteils 200 können zueinander komplementär sein. Außerdem ist in Figur 2a ein Magnetgegenelement 224 gezeigt, hier in Form einer Magnetgegenplatte 224 aus einem magnetischen oder magnetisierbaren Material, wie beispielsweise Eisen. Die Magnetgegenplatte 224 weist hier die Form eines Kreiszylinders auf, wobei auch eine andere Zylindergrundfläche vorstellbar ist, wie beispielsweise eine Polygonform oder auch eine anderweitig geformte Grundfläche. Am Magnetgegenelement kann der zweite Control-Pilot-Kontakt angeordnet sein. Darüber hinaus sind Arretierungselemente 210 angedeutet, die an den Seitenflächen 202 angeordnet sind.

Figur 3b stellt das zweite Verbindungsteil aus Figur 3a in einer Seitenansicht dar. Figur 3b enthält eine Darstellung des zweiten elektrischen Kontakts 221, der um den Hohlraum 203, der in dieser Darstellung nicht sichtbar ist, herum angeordnet ist. Ferner ist in dieser Darstellung das Grundgerüst 201 des zweiten Verbindungsteils 200 sichtbar. Es kann dazu dienen, das zweite Verbindungsteil 200 zumindest teilweise von der Umgebung abzugrenzen. Diese Abgrenzung kann sowohl einer elektrischen Isolation zwischen der Umgebung des und elektrisch leitenden Komponenten des zweiten Verbindungsteils 200, beispielsweise dem zweiten elektrischen Kontakt 221, dienen als auch dem Schutz des zweiten Verbindungsteils 200 vor Feuchtigkeit und/oder anderen Umgebungseinflüssen wie beispielsweise Staub, Dämpfen oder unerwünschten mechanischen Kräften. Das Grundgerüst 201 dient auch zur Befestigung des zweiten Verbindungsteils 200 an umgebenden Fahrzeugteilen oder Anlagenkomponenten und/oder als zentrale Stützkomponente, um weitere Komponenten des zweiten Verbindungsteils 200 daran zu befestigen. Figur 3b zeigt außerdem die Kontaktierungsachse 11 in einer Ausrichtung bezüglich des zweiten Verbindungsteils 200, in der ein Zusammenführen mit dem ersten Verbindungsteil 100 möglich ist. Desweiteren ist in Figur 3b die Anordnung eines elektrischen Leiters 227 gezeigt, der mit dem zweiten elektrischen Kontakt 221 verbunden ist. Der elektrische Leiter 227 ist dazu ausgebildet, große elektrische Ströme zu leiten, beispielsweise bis 1600A, bevorzugt 1900A, besonders bevorzugt bis 3000A. Eine elektrische Verbindung, die einen solchen Strom leiten kann, beispielsweise oder auch insbesondere ohne zeitliche Beschränkung, kann eine Hochstromverbindung sein oder als Hochstromverbindung bezeichnet werden. Die elektrische Verbindung, die durch Berühren des ersten elektrischen Kontakts 121 mit dem zweiten elektrischen Kontakt 221 hergestellt werden kann, kann eine Hochstromverbindung sein. Ferner ist mit dem elektrischen Leiter 227 eine elektrische Verbindung zwischen dem zweiten elektrischen Kontakt 221 und beispielsweise einem elektrischen Energiespeicher (nicht dargestellt) herstellbar. Bei dem elektrischen Strom kann es sich beispielsweise um einen Gleichstrom handeln. Denkbar ist jedoch auch ein Wechselstrom.

Figur 3c zeigt das in den Figuren 3a und 3b dargestellte zweite Verbindungsteil 200 in einer leicht perspektivischen Darstellung. Das zweite Verbindungsteil 200 ist dabei in einem Zustand zu sehen, in dem das erste Verbindungsteil 100 entweder nicht in das zweite Verbindungsteil 200 gesteckt ist oder sich in der Ruheposition befindet. In diesem Zustand wird der zweite elektrische Kontakt 221 (nicht sichtbar in Figur 3c) von dem Kontaktrücksteller 240 verdeckt. Ein manuelles Berühren des zweiten elektrischen Kontaktes 221, beispielsweise durch einen Benutzer, ist deshalb in diesem Zustand zumindest erschwert.

Figur 3d zeigt das zweite Verbindungsteil 200 aus Figur 3c in einer seitlichen Perspektive. Dargestellt sind die zweiten Schutzleiterkontakte 222, die in dafür vorgesehen Bohrungen 231 der Vorsprünge 230, die eine konische Form aufweisen, angeordnet sind. Die zweiten Schutzleiterkontakte 222 sind beweglich angeordnet und können vom Hohlraum 203 des zweiten Verbindungsteils 200 weg gegen ein Vorspannelement 222a, beispielsweise eine mechanische Feder, des zweiten Schutzleiterkontaktes 222 gedrückt werden. Das Wegdrücken kann beispielsweise mit den aus den Ausnehmungen 130 vorstehenden ersten Schutzleiterkontakten 122 des ersten Verbindungsteils 100 realisiert sein. Das Vorspannelement 222a des zweiten Schutzleiterkontaktes 222 ist dazu ausgebildet, eine in Richtung Hohlraum 203 des zweiten Verbindungsteils 200 gerichtete Kraft, beispielsweise eine Federkraft, die davon abhängt, wie weit eine Feder zusammengedrückt wird, auf den zweiten Schutzleiterkontakt 222 auszuüben. Mit Hilfe der Vorspannkraft kann eine Position des zweiten Schutzleiterkontaktes 222 eingestellt werden, insbesondere wenn das erste Verbindungsteil 100 sich nicht oder zumindest nur teilweise, in dem zweiten Verbindungsteil 200 oder in der Ruheposition befindet. In Figur 3d ist eine solche Position dargestellt, in der der zweite Schutzleiterkontakt 222 mit dem Vorsprung 230 bündig abschließt.

Ebenfalls ist sichtbar, dass der Kontaktrücksteller 240 den zweiten elektrischen Kontakt 221 vom Hohlraum 203 räumlich trennt. Der Kontaktrücksteller 240 ist an der dem Hohlraum 203 zugewandten Seite so geformt, dass er mit dem zweiten Abschnitt 102 des ersten Verbindungsteils 100 großflächig in Berührung treten kann und so eine Verschiebekraft auf den zweiten Abschnitt 102 ausüben kann. Diese Verschiebekraft kann von einem Vorspannelement 240a des Kontaktrücksteller 240 bereitgestellt werden, wobei es bei dem Vorspannelement 240a sich ebenfalls um eine mechanische Feder handeln kann, die in Figur 3d auf der dem Hohlraum 203 abgewandten Seite des Kontaktrückstellers 240 angeordnet ist.

Der Kontaktrücksteller 240 ist darüber hinaus mit dem zweiten elektrischen Kontakt 221 kinematisch gekoppelt, wobei die kinematische Kopplung ein starr mit dem Kontaktrücksteller verbundenes Verbindungselement 241 und ein senkrecht zur Kontaktierungsrichtung 12 bewegliches Verschiebelement 242 umfasst. Das Verschiebeelement 242 ist ferner mit dem zweiten elektrischen Kontakt 221 verbunden, der in Figur 3d über ein elastisches Element 243, in diesem Fall eine Tellerfeder, beweglich am Verschiebeelement 242 angeordnet ist. Der zweite elektrische Kontakt 221 ist mit dem elektrischen Leiter 227, der flexibel sein kann und beispielsweise als Litze ausgeführt ist, verbunden. Bei dem zweiten elektrischen Kontakt 221 kann es sich um einen Leistungskontakt handeln, der ausgebildet ist, hohe Leistungen und/oder Ströme zu leiten, beispielsweise bis 1600A, bevorzugt 1900 und besonders bevorzugt bis 3000A.

Die Kopplung zwischen dem starren Verbindungsstück 241 und dem beweglichen Verschiebelement 242 kann über ein in einer Führungsnut 245 (hier nicht dargestellt) des Verschiebeelements 242 angeordnetes, mit dem Verbindungselement 241 verbundenes Wälzlager 244 (hier nicht dargestellt), beispielsweise ein Kugellager 244, erfolgen. Grundsätzlich wäre anstelle des Wälzlagers 244 auch ein Führungsbolzen in der Führungsnut 245 denkbar. Ein Wälzlager 244 bietet jedoch den Vorteil einer besseren Beweglichkeit mit geringerer Reibung. Darüber hinaus ist das bewegliche Verschiebelement 242 über einen in einer Führungsbohrung verschiebbaren Führungszylinder 246 auf eine Bewegung senkrecht zur Kontaktierungsachse 11 eingeschränkt.

In Figur 3d ist ferner eine Ausnehmung 211 dargestellt, die mit dem Verriegelungselement 111 des ersten Verbindungsteils 100 in Eingriff gebracht werden kann, so dass sich das Verriegelungselement 111 in einer Verriegelungsposition befindet und eine Bewegung des ersten Abschnitts 101 des ersten Verbindungsteils 100 bezüglich des zweiten Verbindungsteils 200 verhindert wird. Figur 3d zeigt außerdem das Arretierungselement 210, das hier jeweils eine in drei zylindrische, miteinander verbundene Abschnitte aufgeteilte Form hat und elastisch (nicht sichtbar) am zweiten Verbindungsteil 200 so befestigt ist, dass das Arretierungselement 210 bei Einführen des ersten Verbindungsteils 100 in den Hohlraum 203 des zweiten Verbindungsteils 200 so bewegt wird, dass es im Wesentlichen nicht aus der jeweiligen Seitenwand 202 hervorsteht, außer wenn es mit der Arretierungsausnehmung 110 des ersten Verbindungsteils 100 in Eingriff steht.

In Figur 3e ist das zweite Verbindungsteil 200 aus den Figuren 3a bis 3d in einem Zustand dargestellt, in dem der zweite elektrische Kontakt 221 in den Hohlraum 203 von der jeweiligen Seitenwand 202 hervorsteht und somit in der Darstellung sichtbar ist. Ebenfalls sichtbar sind die Arretierungselemente 210, die in diesem Zustand von der jeweiligen Seitenwand 202 in den Hohlraum 203 des zweiten Verbindungsteils vorstehen.

Figur 3f zeigt das zweite Verbindungsteil 200 aus Figur 3e in einer seitlichen Darstellung, die ähnlich zur der Darstellung in Figur 3d ist. Im Unterschied zu Figur 3d ist das zweite Verbindungsteil 200 in einem Zustand zu sehen, in dem der zweite Abschnitt 102 des ersten Verbindungsteil 100 (im Bild nicht dargestellt) bis zu einer Endposition in den Hohlraum 203 des zweiten Verbindungsteils 200 eingeführt ist. In diesem Zustand ist der Kontaktrücksteller 240 in eine vom Hohlraum 203 weg weisende Richtung verschoben, so dass der zweite elektrische Kontakt 221 nicht vom Kontaktrücksteller 240 verdeckt ist. Mit dem Kontaktrücksteller 240 ist das Verbindungselement 241 in Kontaktierungsrichtung verschoben. Über das gekoppelte bewegliche Verschiebelement 242 ist auch der zweite elektrische Kontakt 221 senkrecht zur Kontaktierungsrichtung 12 so verschoben, dass ein dem Hohlraum 203 zugewandtes Ende des zweiten elektrischen Kontaktes 221 in den Hohlraum 203 hineinragt. Ebenfalls verschoben sind die zweiten Schutzleiterkontakte 222. In diesem Zustand stellen die Vorspannelemente 222a der zweiten Schutzleiterkontakte 222 und das Vorspannelement 240a des Kontaktrückstellers 240 Vorspannkräfte bereit.

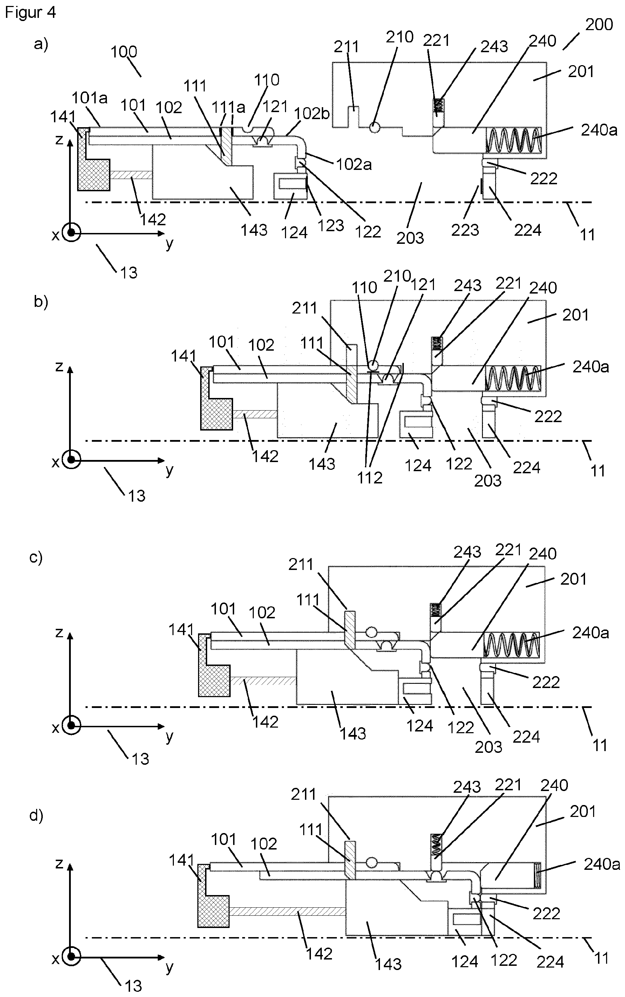

Fig. 4a bis 4d zeigen jeweils eine schematische Darstellung des ersten Verbindungsteils 100 und des zweiten Verbindungsteils 200 in verschiedenen Positionen zueinander. Insbesondere wird deutlich, auf welche Weise die verschiedenen Elemente der Kontakteinheit 1 zusammenwirken.

Figur 4a zeigt das erste Verbindungsteil 100 und das zweite Verbindungsteil 200 schematisch in einer zweidimensionalen Projektion. Erstes Verbindungsteil 100 und zweites Verbindungsteil 200 sind entlang der Kontaktierungsachsen 11 ausgerichtet. Die Kontaktierungsachse 11 weist in y-Richtung des Koordinatensystems 13. Die Koordinatenachsen in z-Richtung sowie x-Richtung sind jeweils senkrecht zur Kontaktierungsachse 11 ausgerichtet. Die schematische Darstellung in Figur 4a ist unter der Annahme einer Symmetrie bezüglich der Kontaktierungsachse 11 vereinfacht. Deshalb erfolgt lediglich die Darstellung einer Hälfte der zweidimensionalen Projektion, da sich die andere Hälfte aus der angenommenen Symmetrie der Projektion ergibt.

Figur 4a zeigt dementsprechend den ersten Abschnitt 101, den zweiten Abschnitt 102 und ein Spannelement 143 des ersten Verbindungsteils 100. Darüber hinaus sind die Arretierungsausnehmung 110 und das Verriegelungselement 111 eingetragen. Ebenfalls eingezeichnet sind der erste Kontakt 121, der erste Schutzleiterkontakt 122 und der Elektromagnet 124. Ferner werden das Grundgerüst 201 des zweiten Verbindungsteils 200, die Verriegelungsausnehmung 211 und das Arretierungselement 210 gezeigt. Hinzu kommen der Kontaktrücksteller 240 und das Vorspannelement 240a des Kontaktrückstellers 240 sowie der zweite Kontakt 221, das Vorspannelement 243 des zweiten Kontaktes 221 sowie der zweite Schutzleiterkontakt 222 des zweiten Verbindungsteils 200. Außerdem sind in Figur 4a der erste Control-Pilot-Kontakt 123 und der zweite Control-Pilot-Kontakt 223 eingetragen.

In Figur 4a befindet sich das erste Verbindungsteil 100 außerhalb des zweiten Verbindungsteils 200. Allerdings befinden sich erstes und zweites Verbindungsteil 100, 200 in einer Position zueinander, in der sie zueinander auf der Kontaktierungsachse 11 bewegbar sind und aufeinander zu geschoben werden können. Bezüglich des Koordinatensystems 13 und ausgehend von der Konstellation in Figur 4a kann das erste Verbindungsteil 100 zumindest teilweise in das zweite Verbindungsteil 200 eingeschoben werden, in dem das erste Verbindungsteil 100 in Richtung der positiven y-Koordinate verschoben wird. In Figur 4a befindet sich das Verriegelungselement 111 in einer Position, in der es nicht von der Seitenfläche 101a des ersten Abschnitts 101 in einer Richtung senkrecht zur Kontaktierungsrichtung hervorsteht. Diese Position des Verriegelungselements 111 ist (nicht direkt aus der Darstellung entnehmbar) zugleich eine Entriegelungsposition und eine Sperrposition. Entriegelungsposition, weil erstes und zweites Verbindungsteil 100, 200 auf diese Weise nicht miteinander verriegelt sind, das heißt sich zueinander bewegen können. Sperrposition, weil sich der zweite Abschnitt 102 nicht bezüglich des ersten Abschnitts 101 bewegen kann. Ferner ist zu sehen, dass der erste elektrische Kontakt 121 vom ersten Abschnitt 101 des ersten Verbindungsteils 100 verdeckt wird und es ist zu sehen, dass der zweite elektrische Kontakt 221 vom Kontaktrücksteller 240 verdeckt wird und entsprechend von einem Hohlraum 203 unzugänglich ist. Dabei wird der Kontaktrücksteller 240 vom Vorspannelement 240a des Kontaktrückstellers 240 in Richtung Hohlraum 203 gedrückt. Die Bewegung des Kontaktrückstellers 240 wird in Figur 4a durch einen Vorsprung im Grundgerüst 201 begrenzt.

Figur 4a zeigt außerdem einen Aktuator 140 bestehend aus einem Aktuatorantrieb 141, beispielsweise einem Elektromotor, einem Aktuatorverbinder 142, beispielsweise einer Gewindestange, und dem Spannelement 143. Der Aktuatorantrieb 141 ist ausgebildet, den Aktuatorverbinder 142 in y-Richtung zu bewegen. Der Aktuatorverbinder 142 ist mit dem Spannelement 143 gekoppelt, beispielsweise mit einer Schraubverbindung. Der Aktuatorantrieb 141 ist dabei steuerbar ausgebildet, so dass die Einstellung einer Position des Spannelements 143 in y-Richtung über eine Steuerung des Aktuatorantriebs 141 möglich ist. Der Aktuatorantrieb 141 kann dabei in einem Fixierungsabschnitt angeordnet sein oder, zumindest teilweise, beispielsweise mit einem Aktuatorantriebsgehäuse, diesen bilden. Der Aktuatorverbinder 142 und das Spannelement 143 können einen Bewegungsabschnitt bilden, wobei der Bewegungsabschnitt gegenüber dem Fixierungsabschnitt bewegbar angeordnet ist. Der Fixierungsabschnitt ist starr mit dem ersten Abschnitt 101 verbunden.

Die Darstellung in Figur 4b ist nahezu gleich zur Darstellung in Figur 4a, mit dem Unterschied, dass sich das erste Verbindungsteil 100 nun in der Ruheposition befindet. In dieser Ruheposition steht das Arretierungselement 210 mit der Arretierungsausnehmung 110 im Eingriff. Andersherum können Arretierungselement 210 und Arretierungsausnehmung 110 durch den Eingriff die Ruheposition definieren. In Figur 4b ist ferner ein Ruhepositionssensor 112 eingetragen, der in den anderen Figuren aus Übersichtlichkeitsgründen weggelassen wird. Mit dem Ruhepositionssensor 112 wird erkannt, ob sich das erste Verbindungsteil 100 in der Ruheposition befindet oder nicht. Der Ruhepositionssensor kann, wie in Figur 4b gezeigt, in mehreren Positionen platziert werden, beispielsweise am oder im Grundgerüst 201 des zweiten Verbindungsteils 200 oder am oder im ersten Abschnitt 101 des ersten Verbindungsteils 100. Darüber hinaus sind verschiedene Ausführungen möglich, beispielsweise als Mikrotaster, der über eine Berührung zwischen erstem und zweitem Verbindungsteil 100, 200 betätigt wird oder auch als Hall Sensor, gegebenenfalls mit gegenüberliegendem Magneten, oder Wirbelstromsensor, mit denen jeweils eine Beabstandung zwischen Flächen des ersten und zweiten Verbindungsteils 100, 200 ermittelt werden kann. Von den genannten Sensoren 112 bereitgestellten Signale können in der Steuereinheit 300 (Figur 1) verarbeitet werden. Der zweite elektrische Kontakt 221 wird durch den Kontaktrücksteller 240 verdeckt und ist deshalb vom Hohlraum 203 ausgehend unzugänglich.

Die Darstellung in Figur 4c unterscheidet sich von der Darstellung in Figur 4b durch die Position des Spannelements 143. Die Form des Verriegelungselements 111 ist mit der Form des Spannelements 143 abgestimmt. Damit ist die Verschiebung des Verriegelungselements 111 durch eine Verschiebung des Spannelements 143 möglich. Die Verschiebung des Spannelements 143 ist mit Hilfe des Aktuatorantriebs 141, der über den Aktuatorverbinder 142 mit dem Spannelement 143 verbunden ist, möglich.

In Figur 4c ist das Verriegelungselement 111 in die Ausnehmung 211 im zweiten Verbindungsteil 200 geschoben. Der erste Abschnitt 101 ist somit im zweiten Verbindungsteil 200 unverschiebbar positioniert. Das heißt, der erste Abschnitt 101 kann sich relativ zum zweiten Verbindungsteil 200 nicht bewegen. In dieser Position ist jedoch eine Bewegung des zweiten Abschnitts 102 relativ zum ersten Abschnitt 101 möglich (in Figur 4c nicht sichtbar). In der dargestellten Position des Spannelements 143 berühren sich das Spannelement 143 und der Elektromagnet 124 an einer Fläche, die jeweils im Wesentlichen senkrecht zur Kontaktierungsrichtung 12 ausgerichtet ist, so dass eine Verschiebekraft in positive y-Richtung vom Spannelement 143 auf den Elektromagneten 124 ausgeübt werden kann. Da der Elektromagnet 124 starr mit dem zweiten Abschnitt 102 verbunden ist, wirkt die Verschiebekraft auch auf den zweiten Abschnitt 102 des ersten Verbindungsteils 100. Der zweite elektrische Kontakt 221 wird durch den Kontaktrücksteller 240 verdeckt und ist deshalb vom Hohlraum 203 ausgehend unzugänglich.

Im Unterschied zur Darstellung in Figur 4c ist das Spannelement 143 in Figur 4d in positive y-Richtung weiter verschoben. Durch das Verschieben des Spannelements 143 ist auch der zweite Abschnitt 102 in positive y-Richtung verschoben, der wiederum den Kontaktrücksteller 240 gegen die Vorspannkraft des Vorspannelements 240a des Kontaktrückstellers 240 in positive y-Richtung verschiebt. Durch das Verschieben des Kontaktrückstellers 240 wird der zweite elektrische Kontakt 221 vom Kontaktrücksteller 240 nicht weiter verdeckt. Der zweite elektrische Kontakt 221 kann nun in z-Richtung so weit bewegt werden, dass er den ersten elektrischen Kontakt 121 berührt. In dieser Position, in der sich der erste elektrische Kontakt 121 und der zweite elektrische Kontakt 221 berühren, besteht eine elektrische Verbindung zwischen dem ersten Verbindungsteil 100 und dem zweiten Verbindungsteil 200, so dass ein Stromfluss durch die Kontakteinheit 1 geleitet werden kann. Die Bewegung des zweiten elektrischen Kontaktes 221 kann durch eine Vorspannkraft, die von der in Figur 4d am zweiten elektrischen Kontakt eingezeichneten mechanischen Feder 243 ausgeübt wird, oder beispielsweise auch über die oben beschriebene kinematische Kopplung zwischen Kontaktrücksteller 240 und zweitem elektrischen Kontakt 221 erfolgen. In der in Figur 4d gezeigten Position des zweiten Abschnitts 102 kann der Elektromagnet 124 mit der Magnetgegenplatte 224 eine Anziehungskraft bereitstellen, wenn der Elektromagnet 124 sich in einem aktiven Zustand befindet, beispielsweise, in dem ein elektrischer Strom in seiner Spulenwindung bereitgestellt wird. Der Stromfluss in der Spulenwindung kann durch eine mit der Spulenwindung elektrisch verbundene elektrischen Stromquelle bewirkt werden, die beispielsweise mit Hilfe eines Schalters eingeschaltet und/oder ausgeschaltet werden kann. Dabei ist es möglich, dass der Schalter durch die Steuereinrichtung 300 (nicht dargestellt) betätigt wird. Der Schalter kann auch manuell betätigt werden. Beispielsweise kann der Schalter als Bedienelement 126 an der Haltevorrichtung 190 bereitgestellt sein oder mittels einer Benutzerschnittstelle, mit der die Funktion der Kontakteinheit 1 durch einen Benutzer beeinflusst werden kann.

Die in den Figuren 4a bis 4d gezeigten Darstellungen zeigen auch, in welcher Reihenfolge Schritte eines Verfahrens durchgeführt werden können, mit denen ein elektrischer Kontakt zwischen dem ersten Verbindungsteil 100 und dem zweiten Verbindungsteil 200 hergestellt werden kann.

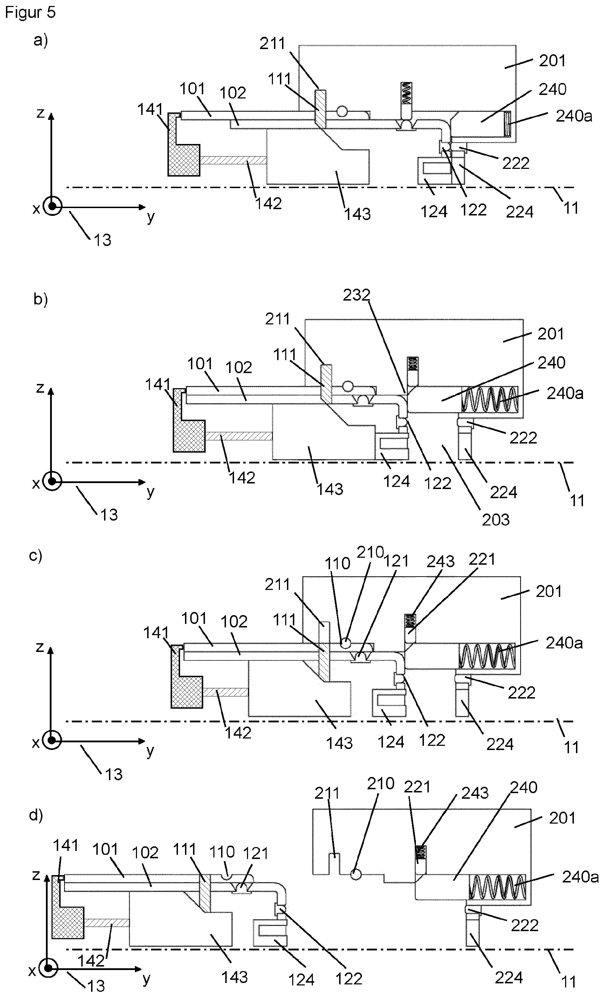

Die in den Figuren 5a bis 5d gezeigten Darstellungen weisen eine Möglichkeit auf, in welcher Reihenfolge Schritte eines Verfahrens durchgeführt werden können, mit denen die elektrische Verbindung zwischen dem ersten Verbindungsteil 100 und dem zweiten Verbindungsteil 200 gelöst werden kann. Dabei zeigen Fig. 5a bis 5d jeweils eine schematische Darstellung des ersten und des zweiten Verbindungsteils 100, 200 in verschiedenen Positionen zueinander.

Die Abbildung in Figur 5a ist der Abbildung in Figur 4d ähnlich. Im Unterschied zu Figur 4d befindet sich in Figur 5a das Spannelement 143 in einer vom Elektromagneten 124 beabstandeten Position, in der jedoch das Verriegelungselement 111 mit dem ersten Abschnitt 101 des ersten Verbindungsteils 100 und der Ausnehmung 211 im zweiten Verbindungsteil 200 im Eingriff steht. Der erste elektrische Kontakt 121 und der zweite elektrische Kontakt 221 berühren einander, das heißt zwischen Ihnen besteht eine elektrisch leitende Verbindung, so dass ein Stromfluss durch die Kontakteinheit 1 geleitet werden kann. Wenn der Elektromagnet 124 in einem aktiven Zustand ist, kann das Spannelement 143 in einer vom Elektromagneten 124 beabstandeten Position sein, da die Position des zweiten Abschnitts 102 bezüglich des zweiten Verbindungsteils 200 durch die magnetischen Anziehungskräfte zwischen Elektromagneten 124 und Magnetgegenelement 224 aufrechterhalten wird.

Wird jedoch der Elektromagnet 124 in einen inaktiven Zustand versetzt, beispielsweise, in dem ein Stromfluss durch die Spulenwindung des Elektromagneten 124 unterbrochen wird, wirken keine magnetischen Anziehungskräfte zwischen Elektromagnet 124 und Magnetgegenelement 224. Damit wird, bewirkt durch eine Vorspannkraft des Vorspannelements 240a des Kontaktrückstellers 240, über den Kontaktrücksteller 240 eine Rückstellkraft auf den zweiten Abschnitt 102 ausgeübt, so dass dieser in negative y-Richtung verschoben wird.

Das Ergebnis dieser Bewegung ist in Figur 5b gezeigt. Die Bewegung des zweiten Abschnitts 102 ist durch das Spannelement 143 begrenzt. Wie in Figur 5b gezeigt, ist im Ergebnis dieser Bewegung auch die elektrische Verbindung zwischen dem ersten elektrischen Kontakt 121 und dem zweiten elektrischen Kontakt 221 durch Beabstandung beider Kontakte 121, 221 voneinander getrennt. Der zweite elektrische Kontakt 221 wird durch den Kontaktrücksteller 240 verdeckt und ist deshalb vom Hohlraum 203 ausgehend unzugänglich. In

Figur 5b ist auch gezeigt, dass die Bewegung des Kontaktrückstellers 240 in negative y-Richtung durch einen Anschlag am Grundgerüst 201 begrenzt wird.

Figur 5c zeigt das Spannelement 143 des ersten Verbindungsteils 100 in einer im Vergleich zu Figur 5b in negative y-Richtung verschobenen Position. In dieser Position ist das mit dem Spannelement 143 kinematisch gekoppelte Verriegelungselement 111 in einer Entriegelungsposition angekommen, in der eine Bewegung des ersten Abschnitts 101 relativ zum zweiten Verbindungsteil 200 möglich ist und in der auch gleichzeitig eine Bewegung des zweiten Abschnitts 102 bezüglich des ersten Abschnitts 101 verhindert wird; die Entriegelungsposition ist in diesem Sinn gleichzeitig eine Sperrposition. Spannelement 143 und Elektromagnet 124 stehen nun nicht mehr miteinander in Berührung. Figur 5c gleicht Figur 4b, das heißt, diese Positionierung der Elemente der Kontakteinheit 1 kann sowohl bei der Herstellung der elektrischen Verbindung als auch beim Trennen der elektrischen Verbindung auftreten.

Das erste Verbindungsteil 100 kann nun vom zweiten Verbindungsteil 200 durch Verschieben entlang der Kontaktierungsrichtung 12, genauer in negative y-Richtung, getrennt werden. Das Ergebnis dieser Trennung ist in Figur 5d dargestellt. Figur 5d gleicht Figur 4a, das heißt, diese Positionierung der Elemente der Kontakteinheit 1 kann sowohl bei der Herstellung der elektrischen Verbindung als auch beim Trennen der elektrischen Verbindung auftreten.

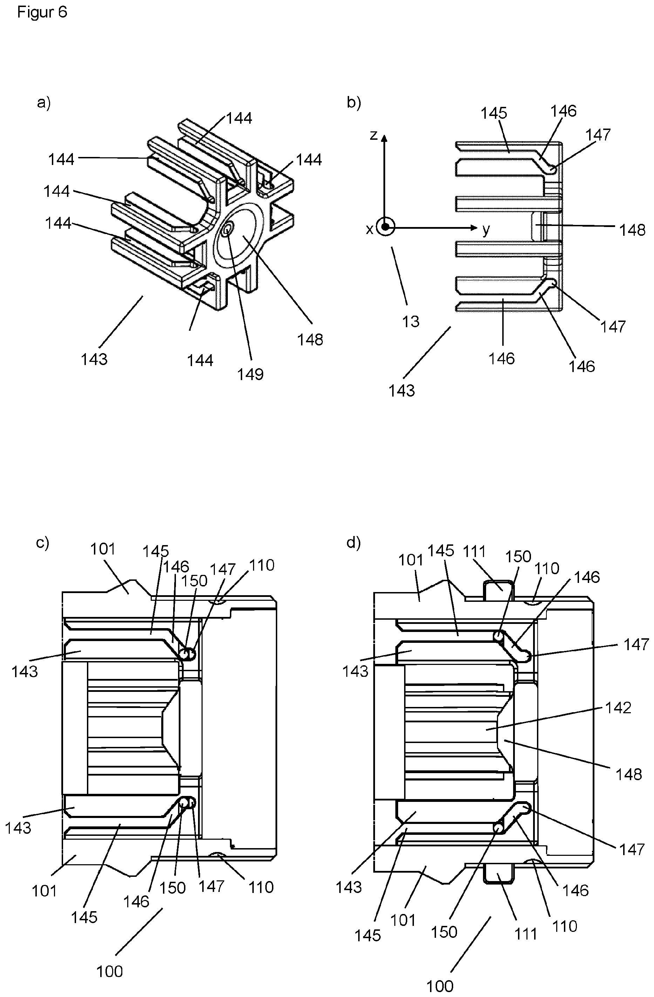

Die Figuren 6a bis 6b zeigen eine schematische Darstellung des Spannelements 143. Dabei zeigt Figur 6a eine isometrische Darstellung und Figur 6b eine seitliche Darstellung des Spannelements 143. Das Spannelement 143 umfasst eine gewölbte Spannscheibe 148 mit einer Bohrung 149 sowie Längselemente, die jeweils mit einer Führungsnut 144 versehen sind. In Figur 6b ist das Koordinatensystem 13 eingetragen. Die Führungsnut 144 besitzt drei Abschnitte 145, 146 und 147, die besonders gut in Figur 6b zu sehen sind. Dies ist ein in y-Richtung ausgedehnter, langgezogener Abschnitt 146, ein in y-Richtung ausgedehnter, kurzer Abschnitt 147 sowie ein Übergangsabschnitt 146, der den langgezogenen Abschnitt 145 und den kurzen Abschnitt 147 verbindet. Der lange Abschnitt 145 und der kurze Abschnitt 147 sind zueinander parallelversetzt angeordnet. Die Führungsnut 144 ist ausgebildet, einen Führungsbolzen 150 (gezeigt in den Figuren 6c und 6d) des Verriegelungselements 111 (hier nicht dargestellt) zu führen. Wird das Spannelement 143 in y-Richtung verschoben, wird dieser in der Führungsnut 144 angeordnete und durch die Führungsnut 144 geführte Führungsbolzen 150 in z-Richtung bewegt. Die exakte Position des Führungsbolzens 150 in z-Richtung wird dabei von der Position des Spannelements in y-Richtung vorgegeben. Das Verriegelungselement 111, das mit dem Führungsbolzen 150 starr verbunden ist, kann auf diese Weise in z-Richtung bewegt werden. Die Spannscheibe 148 und die Bohrung 149 können genutzt werden, um das Spannelement 143 über den Aktuatorverbinder 142 (hier nicht dargestellt), beispielsweise eine Gewindestange, mit dem Aktuatorantrieb 141, beispielsweise einem Linearmotor, zu koppeln, beispielsweise in dem die Gewindestange durch die Bohrung 149 geschoben und dort mit einer Schraubverbindung befestigt wird.

Die Figuren 6c bis 6d zeigen eine schematische Darstellung der kinematischen Kopplung zwischen dem Spannelement 143 und dem Verriegelungselement 111. Das Koordinatensystem 13 kann von Figur 6b sinngemäß auf die Figuren 6c und 6d angewendet werden. Dabei ist zu sehen, dass der Führungsbolzen 150, der beispielsweise eine zylindrische Form haben kann und der starr mit dem Verriegelungselement 111 verbunden ist und wobei die Zylinderachse in x-Richtung ausgerichtet sein kann, in der Führungsnut 144 angeordnet ist. Figur 6c zeigt dabei eine Position des Spannelements 143 bei der sich der Führungsbolzen 150 in dem kurzen Abschnitt 147 des Führungsnut 144 befindet. Das Verriegelungselement 111 steht hier nicht vom ersten Abschnitt 101 des ersten Verbindungsteils 100 hervor. In Figur 6d ist das Spannelement 143 so verschoben, dass sich der Führungsbolzen 150 an einem Ende des langgezogenen Abschnitts 145 der Führungsnut 144 befindet. Der Führungsbolzen 150 ist dabei in z-Richtung so verschoben, dass das mit ihm starr gekoppelte Verriegelungselement 111 vom ersten Abschnitt 101 des ersten Verbindungsteils 100 hervorsteht.

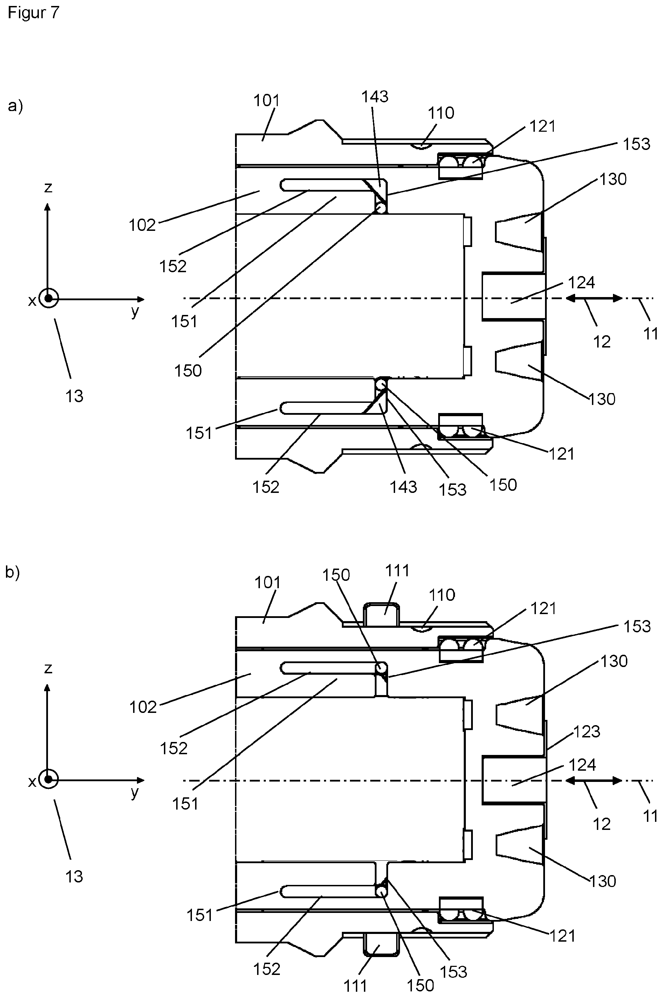

Die Figuren 7a bis 7b zeigen eine schematische Darstellung einer Sperrung und einer Entsperrung eines zweiten Abschnitts 102 des ersten Verbindungsteils 100. Im Vergleich zu dem in den Figuren 6a bis 6d Gezeigten ist in den Figuren 7a und 7b der zweite Abschnitt 102 des ersten Verbindungsteils 100 dargestellt, andere Details sind weggelassen bzw. in der Darstellung verdeckt. Der zweite Abschnitt 102 umfasst eine Sperrführungsnut 151, in die der Führungsbolzen 150 hineinragt. Die Sperrführungsnut 151 weist einen Freigabeabschnitt 152, der sich in y-Richtung erstreckt, und einen Sperrabschnitt 153, der sich in z-Richtung erstreckt, auf.

Befindet sich der Führungsbolzen 150 in der in Figur 6c gezeigten Position, die durch die Position des Spannelements 143 bedingt ist, dann entspricht die Position des Führungsbolzens 150 bezüglich der Sperrführungsnut 151 der in Figur 7a gezeigten Position. Das heißt, der Führungsbolzen 150 befindet sich im Sperrabschnitt 153 der Sperrführungsnut 151. Die Sperrführungsnut 151 und der Führungsbolzen 150 verhindern in dieser Position, dass sich der zweite Abschnitt 102 des ersten Verbindungsteils 100 in y-Richtung bewegen kann. Damit ist, wie in Figur 7a dargestellt, ein Herausgleiten des zweiten Abschnitts 102 aus dem den zweiten Abschnitt 102 teilweise umschließenden ersten Abschnitt 101 des ersten Verbindungsteils 100 nicht möglich. Zum anderen wird so dafür gesorgt, dass der erste elektrische Kontakt 121 vom ersten Abschnitt 101 des ersten Verbindungsteils 100 verdeckt ist und somit einer manuellen Berührung nicht zugänglich ist. Mit diesem Merkmal können insofern Sicherheitsanforderungen erfüllt werden.

Befindet sich der Führungsbolzen 150 in der in Figur 6d gezeigten Position, die durch die Position des Spannelements 143 bedingt ist, dann entspricht die Position des Führungsbolzens 150 bezüglich der Sperrführungsnut 151 der in Figur 7b gezeigten Position. Das heißt, der Führungsbolzen 150 befindet sich im Freigabeabschnitt 152 der Sperrführungsnut 151. In dieser Position wird die Bewegung des zweiten Abschnitts 102 des ersten Verbindungsteils 100 in y-Richtung erlaubt, so dass beispielsweise die Herstellung einer elektrischen Verbindung zwischen dem ersten und dem zweiten Verbindungsteil 100, 200 möglich ist.

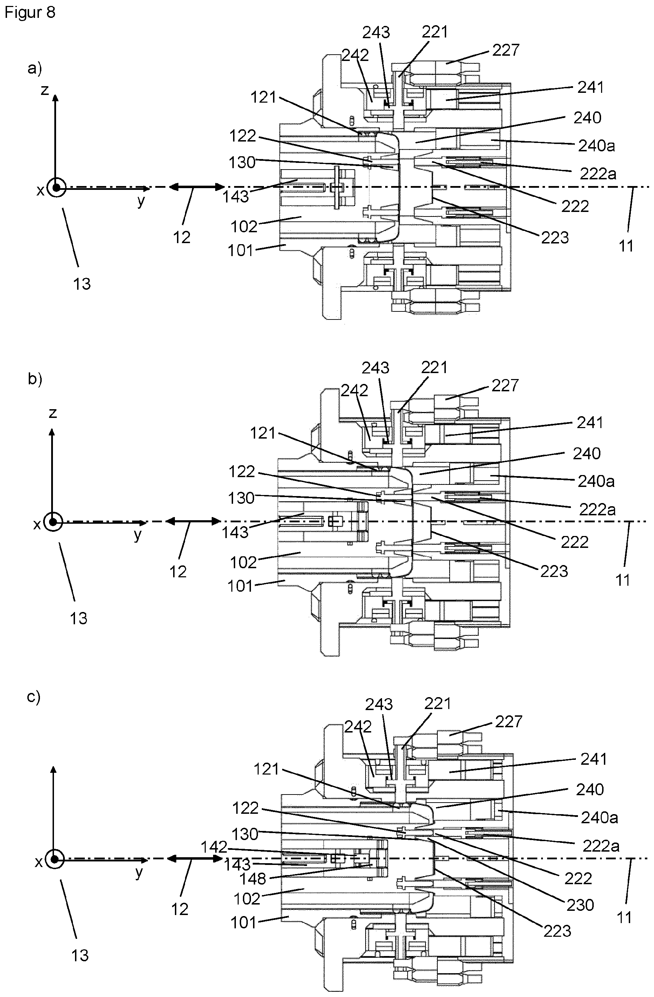

Die Figuren 8a bis 8c zeigen schematisch Darstellungen des ersten und des zweiten Verbindungsteils 100, 200 bei Herstellung einer elektrischen Verbindung zwischen dem ersten und dem zweiten Verbindungsteil 100, 200. Die Figuren zeigen verschiedene Schnittdarstellungen und voneinander verschiedene Detailtiefen. Figur 8a zeigt das erste Verbindungsteil 100 in der Ruheposition. Diese Position entspricht der in Figur 4c dargestellten Position. Zu sehen sind ferner die ersten Schutzleiterkontakte 122 des ersten Verbindungsteils 100 und die zweiten Schutzleiterkontakte 222 des zweiten Verbindungsteils 200, die sich in dieser Position nicht berühren.

Figur 8b zeigt einen in Kontaktierungsrichtung 12, d.h. y-Richtung, insbesondere positive y-Richtung, in Bezug auf Figur 8a verschobenen zweiten Abschnitt 102. Der zweite Abschnitt 102 berührt den Kontaktrücksteller 240 wobei durch die Verschiebung des zweiten Abschnitts 102 der Kontaktrücksteller 240 verschoben wird. Damit wird der zweite elektrische Kontakt 102 nicht mehr vom Kontaktrücksteller 240 verdeckt. Darüber hinaus wird die Bewegung des Kontaktrückstellers 240 über das Verbindungselement 241 auf das Verschiebeelement 242 übertragen, so dass das Verschiebeelement 242 in der Figur 8b in einer Position zu sehen ist, in der der mit dem Verschiebeelement 242 verbundene zweite elektrische Kontakt 221 in Richtung des ersten elektrischen Kontakts 121 verschoben ist. Es ist zu erkennen, dass zwischen dem ersten elektrischen Kontakt 121 und dem zweiten elektrischen Kontakt 221 noch keine elektrische Verbindung besteht, während der erste Schutzleiterkontakt 122 und der zweite Schutzleiterkontakt 222 einander berühren, also eine elektrische Verbindung zwischen beiden hergestellt ist.

Figur 8c zeigt einen in Kontaktierungsrichtung 12, d.h. y-Richtung, konkret in positive y-Richtung, in Bezug auf Figur 8b verschobenen zweiten Abschnitt 102. Es ist zu sehen, wie der Vorsprung 230 des zweiten Verbindungsteils 100 mit der Ausnehmung im zweiten Abschnitt 102 des ersten Verbindungsteils 100 in Eingriff steht. Der erste elektrische Kontakt 121 und der zweite elektrische Kontakt 221 berühren nun einander, so dass eine elektrische Verbindung besteht, über die auch ein hoher elektrischer Strom geleitet werden kann.

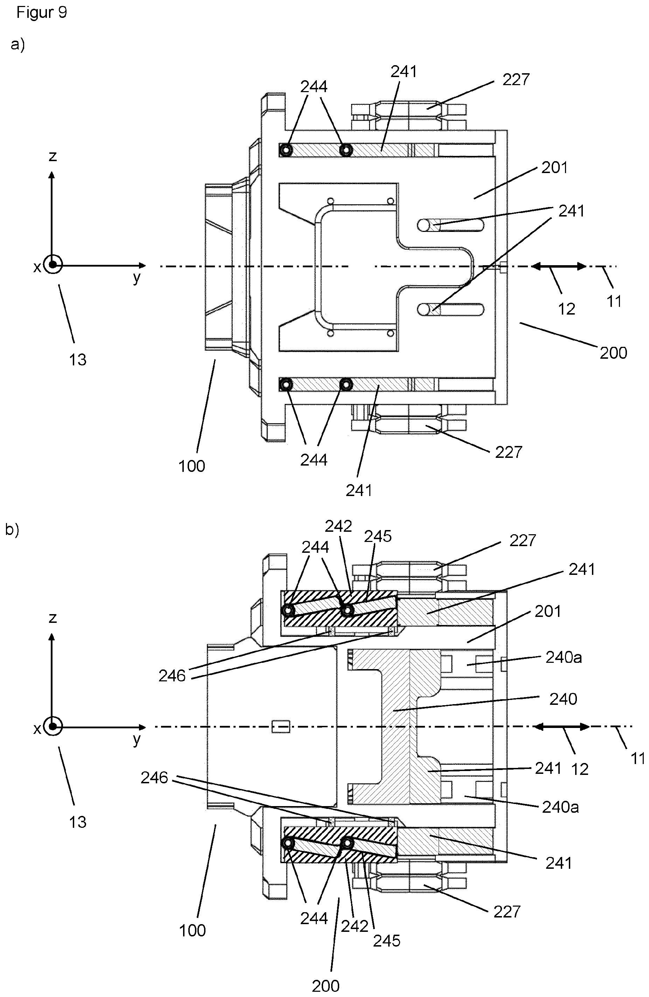

Die Figuren 9a und 9b zeigen eine schematische Darstellung der kinematischen Kopplung zwischen dem Kontaktrücksteller 240 und dem zweiten elektrischen Kontakt 221, wie sie in der Kontakteinheit 1 der Figuren 8a bis 8c verwendet wird. Dabei werden in Figur 9a Wälzlager 244, beispielsweise Kugellager, gezeigt, die am Verbindungselement 241 angebracht sind, beispielsweise mit einer starren Verbindung zwischen einem Innenring des Wälzlagers 244 und dem Verbindungselement 241. Dies bedeutet, wenn das Verbindungselement 241 in y-Richtung verschoben wird, beispielsweise durch eine Verschiebung des Kontaktrückstellers 240 in y-Richtung, werden gleichzeitig die Wälzlager 244 in y-Richtung verschoben. Jedes der Wälzlager 244 ragt, wie in Figur 9b zu sehen ist, in einen Abschnitt einer Führungsnut 245 des Verschiebelements 242 hinein. Jeder Abschnitt der Führungsnut 245 ist so gestaltet, dass das jeweilige Wälzlager 244 bezüglich der Führungsnut 245 eine langgestreckte Bewegung in y-Richtung und in z-Richtung eine weniger langgestreckte, das heißt kurze Bewegung ausführen kann. Das Verhältnis von langgestreckter Bewegung zu kurzer Bewegung ist proportional zu einem Kraftübersetzungsverhältnis zwischen einer Verschiebekraft auf den Kraftrücksteller 240 und einer Kraft, die am zweiten elektrischen Kontakt 221 angreift und in Richtung des ersten elektrischen Kontaktes 121 wirkt.

Das Verschiebeelement 242 weist darüber hinaus eine Fixierung in y-Richtung auf. Diese Fixierung wird durch die Führungsbohrungen (nicht sichtbar) in z-Richtung, die im Verschiebeelement 242 eingebracht sind, und am Grundgerüst 201 fixierte Führungszylinder 246 realisiert, entlang derer sich das Verschiebeelement 242 bewegen kann. Aufgrund dieses Aufbaus ist es nun möglich, dass, wenn sich der Kontaktrücksteller 240 in y-Richtung bewegt, diese Bewegung in eine z-Richtung des Verschiebeelements 242 transformiert wird.

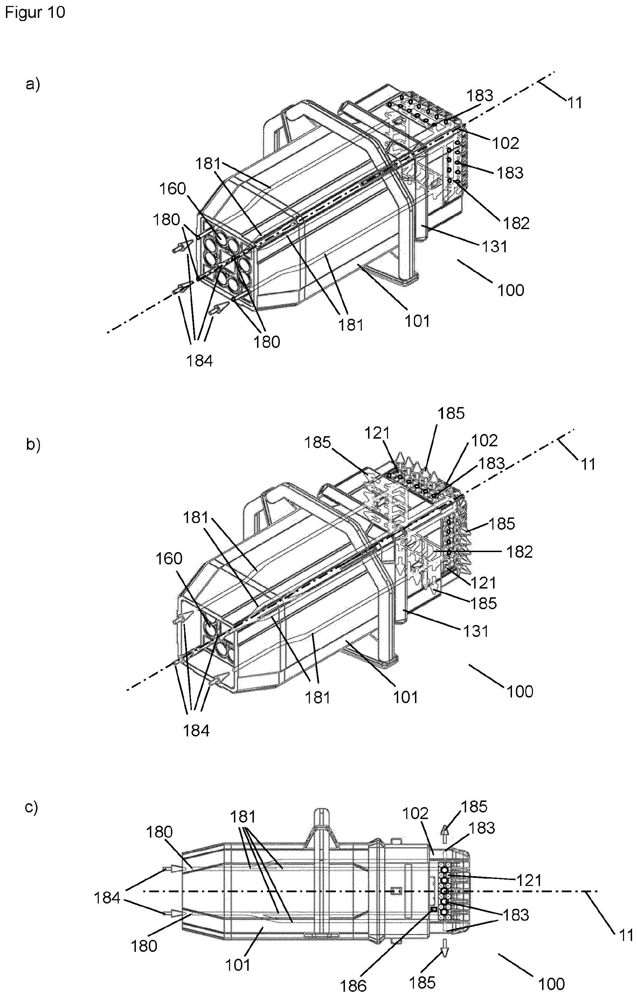

Die Figuren 10a bis 10c zeigen jeweils eine schematische Darstellung einer Luftführung zur Temperaturkonditionierung. Zunächst zur Figur 10a. Es wird einströmende Luft 184 an den Lufteintrittsöffnungen 180 bereitgestellt, beispielsweise mittels eines an die Lufteintrittsöffnungen 180 fluidisch angeschlossenen unter Druck stehenden Luftreservoirs oder beispielsweis auch mittels eines fluidisch an die Lufteintrittsöffnungen 180 angeschlossenen Kompressors oder Lüfters. Die Lufteintrittsöffnungen 180 sind in diesem Beispiel an einer der Stirnfläche 102a (nicht sichtbar) gegenüberliegenden Fläche des zweiten Abschnitts 102 des ersten Verbindungsteils 100 angeordnet. Die einströmende Luft 184 gelangt über die Lufteintrittsöffnungen 180 in Luftführungskanäle 181, von denen ausgehend sie sich in einem Luftverteiler 182 ausbreitet. Der Luftverteiler 182 besitzt die Aufgabe, die eingeströmte Luft 184 vor einem Ausströmen aus dem Luftverteiler 182 im ersten Verbindungsteil 100 so zu verteilen, dass die ausströmende Luft 185, das heißt die Luft, die an der Luftaustrittsöffnung 183 aus dem Luftverteiler 182 ausströmt, möglichst räumlich gleichverteilt am ersten elektrischen Kontakt 121 bereitgestellt ist. Die ausgeströmte Luft 185 überstreicht nach dem Ausströmen den ersten elektrischen Kontakt 121 und nimmt dabei eine Wärmemenge, die durch elektrische Stromleitung im ersten elektrischen Kontakt 121 entstehen kann, auf. Dadurch wird der erste elektrische Kontakt 121 gekühlt und die Luft erwärmt. Figur 10a zeigt darüber hinaus einen elektrischen Leiter 160, der mit dem ersten elektrischen Kontakt 121 verbunden ist. Der elektrische Leiter 160 ist dazu ausgebildet, große elektrische Ströme zu leiten, beispielsweise bis 1600A, bevorzugt 1900A, besonders bevorzugt bis 3000A. Mit dem elektrischen Leiter 160 ist beispielsweise eine elektrische Verbindung zwischen dem ersten elektrischen Kontakt 121 und einer elektrischen Energiequelle oder einer elektrischen Energiesenke herstellbar.

Figur 10b zeigt den in Figur 10a dargestellten Aufbau in einer ebenfalls perspektivischen Ansicht. Dabei sind zusätzlich zum in Figur 10a Dargestellten Pfeile eingetragen, die die ausströmende Luft 185 markieren sollen. Zu sehen ist, dass die ausströmende Luft 185 neben dem ersten elektrischen Kontakt 121 aus den Luftaustrittsöffnungen 183 ausströmt. Die Austrittsrichtung ist dabei im Wesentlichen senkrecht zur Kontaktierungsachse 11.

Figur 10c zeigt den Aufbau aus Figur 10b in einer seitlichen Ansicht, wobei hier insbesondere auch der erste elektrische Kontakt 121 gut zu sehen ist. Darüber hinaus ist in Figur 10c beispielhaft auch ein Temperatursensor 186 eingetragen, der beispielsweise eine Temperatur in der Umgebung des ersten elektrischen Kontaktes 121 erfassen und die erfasste Temperatur beispielsweise als ein entsprechendes Signal der Steuereinheit 300 bereitstellen kann. Es ist auch möglich, den Temperatursensor an einer anderen Stelle im ersten Verbindungsteil 100 anzuordnen, beispielsweise an oder in einem Luftführungskanal 181, am oder im Luftverteiler 182 oder auch an einem elektrischen Leiter 160. Ein mögliches Kriterium für die Platzierung des Temperatursensors kann auch sein, dass aus der gemessenen Temperatur eine Schlussfolgerung gezogen werden kann, ob beispielsweise ein materialbezogener Temperaturgrenzwert eines in der Kontakteinheit verwendeten Materials über- oder unterschritten wird. Die vom Temperatursensor 186 gemessene Temperatur kann als Signal der Steuereinheit 300 bereitgestellt werden.

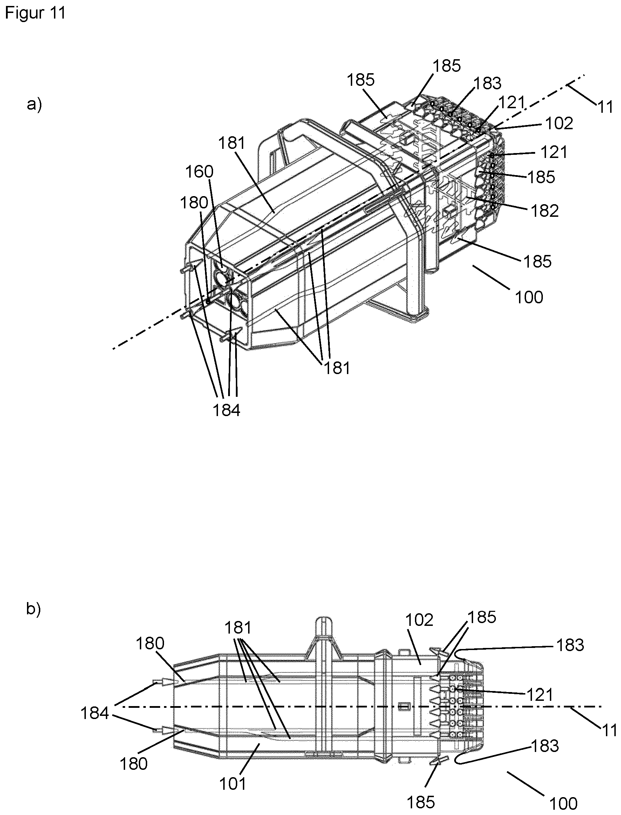

Die Figuren 11a und 11b zeigen eine schematische Darstellung einer alternativen Luftführung zur Temperaturkonditionierung. Im Unterschied zur in den Figuren 10a bis 10c gezeigten Ausführung sind die Luftaustrittsöffnungen 183 nun so ausgerichtet, dass die ausströmende Luft 185 nicht senkrecht zur Kontaktierungsachse 11 ausströmt, sondern in einem zur Kontaktierungsachse 11 geneigten Winkel, so dass die Luftströmungsrichtung eine Komponente in Richtung der Kontaktierungsachse 11 aufweist. Damit wird die ausströmende Luft 185 gezielter zum ersten elektrischen Kontakt 121 geleitet. Die Kühlungswirkung der ausströmenden Luft 185 kann so verbessert werden. Figur 11a zeigt diese Ausführung in einer perspektivischen Ansicht, Figur 11b in einer seitlichen Ansicht.

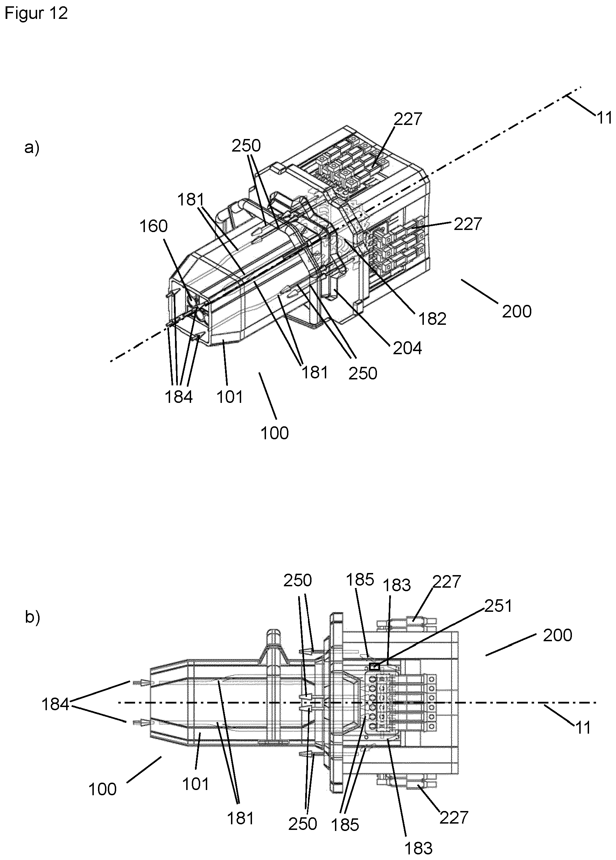

Die Figuren 12a und 12b zeigen eine schematische Darstellung der alternativen Luftführung zur Temperaturkonditionierung mit erstem und zweitem Verbindungsteil 100, 200. In Figur 12a ist dabei das erste und das zweite Verbindungsteil 100, 200 in einer Position zueinander zu sehen, in der eine elektrische Verbindung zwischen dem ersten und dem zweiten Verbindungsteil 100, 200 besteht. Das erste Verbindungsteil 100 entspricht dabei dem ersten Verbindungsteil 100 aus den Figuren 11a und 11b. Die ausströmende Luft 185 wird hier über den ersten elektrischen Kontakt 121 und den zweiten elektrischen Kontakt 221 geleitet und kann dort produzierte Wärme aufnehmen. Die ausströmende Luft 185 gelangt so in den Hohlraum 203 (nicht eingezeichnet) und kann dann den Hohlraum 203 über Öffnungen verlassen und als Abluft 250 ausströmen.

Figur 12b zeigt dies aus einer seitlichen Perspektive. Darüber hinaus ist in Figur 12b beispielhaft auch ein Temperatursensor 251 eingetragen, der beispielsweise eine Temperatur in der Umgebung des zweiten elektrischen Kontaktes 221 erfassen und die erfasste Temperatur beispielsweise als ein entsprechendes Signal der Steuereinheit 300 bereitstellen kann. Es ist beispielsweise auch denkbar, dass die Steuereinheit 300 die Stromstärke des Stroms, der durch die elektrische Verbindung zwischen erstem elektrischen Kontakt 121 und zweiten elektrischem Kontakt 221 fließt, in Abhängigkeit von dem Wert der erfassten Temperatur so steuert, dass beispielsweise bei einer Temperatur, die dicht an einem oberen, vordefinierten Grenzwert liegt, die Stromstärke reduziert wird. In diesem Anwendungsfall besteht auch die Möglichkeit, dass die Steuereinheit 300 ein Signal ausgibt, aufgrund dessen mehr Luft und/oder mehr Kühlmittel zur Kühlung der Kontakteinheit 1 bereitgestellt wird. Es ist auch möglich, den Temperatursensor 251 an einer anderen Stelle im zweiten Verbindungsteil 200 anzuordnen, beispielsweise an oder in dem Hohlraum 203 oder auch an einem elektrischen Leiter 227. Ein mögliches Kriterium für die Platzierung des Temperatursensors kann auch sein, dass aus der gemessenen Temperatur eine Schlussfolgerung gezogen werden kann, ob beispielsweise ein materialbezogener Temperaturgrenzwert eines in der Kontakteinheit verwendeten Materials über- oder unterschritten wird.

Die Kontakteinheit 1 kann verwendet werden, einen wieder aufladbaren Batteriespeicher in einem Fahrzeug mit einer Energiequelle zu verbinden. Dazu kann der erste elektrische Kontakt 121 des ersten Verbindungsteils 100 mit dem im ersten Verbindungsteil 100 angeordneten elektrischen Leiter 160 elektrisch verbunden sein und über diesen an eine elektrische Energiequelle angeschlossen werden. Gleichfalls kann der zweite elektrische Kontakt 221 des zweiten Verbindungsteils 200 mit dem im zweiten Verbindungsteil 200 angeordneten elektrischen Leiter 227 elektrisch verbunden sein und über diesen an beispielsweise einen wieder aufladbaren Batteriespeicher angeschlossen werden.

Es ist auch möglich, dass elektrische Energie in Form von elektrischem Strom von dem Energiespeicher, der dann als Energiequelle dient, in das Versorgungsnetz, das dann eine Energiesenke darstellt, durch die Kontakteinheit 1 geleitet wird, beispielsweise für eine Stabilisierung des elektrischen Versorgungsnetzes oder eines Teils des elektrischen Versorgungsnetzes und/oder, verallgemeinert, für die Bereitstellung einer netzdienlichen Leistung des Energiespeichers. Dafür können das Versorgungsnetz beispielsweise mit dem ersten elektrischen Kontakt 121 und der Energiespeicher mit dem zweiten elektrischen Kontakt 221 elektrisch verbunden sein. Es ist ebenso denkbar, dass beispielsweise das elektrische Versorgungsnetz mit dem zweiten elektrischen Kontakt 221 und der Energiespeicher mit dem ersten elektrischen Kontakt 121 elektrisch verbunden sind.

### Liste der Bezugszeichen

- 1: Kontakteinheit
- 11: Kontaktierungsachse
- 12: Kontaktierungsrichtung
- 13: kartesisches Koordinatensystem
- 100: erstes Verbindungsteil
- 101: erster Abschnitt
- 101a: Seitenfläche des ersten Abschnitts
- 102: zweiter Abschnitt
- 102a: Stirnfläche des zweiten Abschnitts
- 102b: Seitenfläche des zweiten Abschnitts
- 110: Arretierungsausnehmung
- 111: Verriegelungselement
- 111a: Verriegelungsausnehmung
- 112: Ruhepositionssensor
- 121: erster elektrischer Kontakt
- 122: erster Schutzleiterkontakt
- 123: erster Control-Pilot-Kontakt
- 124: Elektromagnet
- 126: Bedienelement
- 130: Ausnehmung für Schutzleiter im ersten Verbindungsteil
- 131: Anschlagkante
- 132: Vorsprung im zweiten Abschnitt des ersten Verbindungsteils
- 140: Aktuator
- 141: Aktuatorantrieb
- 142: Aktuatorverbinder
- 143: Spannelement
- 144: Führungsnut des Spannelements
- 145: langer Abschnitt
- 146: Verbindungsabschnitt
- 147: kurzer Abschnitt
- 148: Spannscheibe
- 149: Bohrung
- 150: Führungsbolzen
- 151: Sperrführungsnut
- 152: Freigabeabschnitt
- 153: Sperrabschnitt
- 160: elektrischer Leiter
- 180: Lufteintrittsöffnung
- 181: Luftführungskanal
- 182: Luftverteiler
- 183: Luftaustrittsöffnung
- 184: einströmende/eingeströmte Luft
- 185: ausströmende/ausgeströmte Luft
- 186: Temperatursensor
- 190: Haltevorrichtung
- 191: Distanzstück
- 200: zweites Verbindungsteil
- 201: Grundgerüst des zweiten Verbindungsteils
- 201a: Stirnfläche des zweiten Verbindungsteils
- 202: Seitenfläche des zweiten Verbindungsteils
- 203: Hohlraum
- 204: Dichtelement
- 210: Arretierungselement
- 211: Ausnehmung
- 221: zweiter elektrischer Kontakt
- 222: zweiter Schutzleiterkontakt
- 222a: Vorspannelement des Schutzleiterkontakts
- 223: zweiter Control-Pilot-Kontakt
- 224: Magnetgegenelement
- 227: elektrischer Leiter
- 230: Vorsprung
- 231: Bohrung
- 232: Anschlag
- 240: Kontaktrücksteller
- 240a: Vorspannelement des Kontaktrückstellers
- 241: Verbindungselement
- 242: Verschiebeelement
- 243: Federelement
- 244: Wälzlager
- 245: Führungsnut des Verschiebeelements
- 246: Führungszylinder
- 250: Abluft
- 251: Temperatursensor
- 300: Steuereinheit
- 301: erste Steuereinheit
- 302: zweite Steuereinheit

## Patentansprüche

1. Kontakteinheit (1) zum Herstellen einer elektrisch leitenden Verbindung, umfassend
- ein erstes Verbindungsteil (100) mit einem ersten elektrischen Kontakt (121) und ein zweites Verbindungsteil (200) mit einem zweiten elektrischen Kontakt (221), wobei
∘ das erste Verbindungsteil (100) und das zweite Verbindungsteil (200) zueinander entlang einer Kontaktierungsachse (11), die in einer Kontaktierungsrichtung (12) verläuft, bewegbar angeordnet sind;
∘ das erste Verbindungsteil (100) einen ersten Abschnitt (101) und einen zweiten Abschnitt (102) umfasst, wobei der zweite Abschnitt (102) bezüglich des ersten Abschnitts (101) bewegbar und der erste elektrische Kontakt (121) am zweiten Abschnitt (102) angeordnet ist;
∘ das erste Verbindungsteil (100) gegenüber dem zweiten Verbindungsteil (200) so entlang der Kontaktierungsachse (11) positionierbar ist, dass der erste Abschnitt (101) des ersten Verbindungsteils (100) gegenüber dem zweiten Verbindungsteil (200) in einer Ruheposition zu liegen kommt;
∘ der erste elektrische Kontakt (121) und der zweite elektrische Kontakt (221) ausgebildet sind, wenn sie einander berühren, eine elektrisch leitende Verbindung zwischen dem ersten Verbindungsteil (100) und dem zweiten Verbindungsteil (200) herzustellen, die ausgebildet ist, eine elektrische Energie zu leiten;
- eine Positioniereinheit (131, 110, 210), die ausgebildet ist, die Ruheposition vorzugeben;
- einen Aktuator (140), der ausgebildet ist, wenn sich der erste Abschnitt (101) des ersten Verbindungsteils (100) in der Ruheposition befindet, den zweiten Abschnitt (102) des ersten Verbindungsteils (100) in der Kontaktierungsrichtung (12) relativ zum ersten Abschnitt (101) so zu verschieben, dass der zweite Abschnitt (102) des ersten Verbindungsteils (100) und das zweite Verbindungsteil (200) in der Kontaktierungsrichtung (12) aneinander liegen sowie der erste elektrische Kontakt (121) und der zweite elektrische Kontakt (221) einander berühren; **gekennzeichnet durch**
- ein Verriegelungselement (111), wobei das Verriegelungselement (111) zwischen einer Verriegelungsposition und einer Entriegelungsposition bewegbar ist, wobei das Verriegelungselement (111) ausgebildet ist,
∘ in der Verriegelungsposition eine Bewegung des ersten Abschnitts (101) des ersten Verbindungsteils (100) relativ zum zweiten Verbindungsteil (200) zu verhindern und eine Bewegung des zweiten Abschnitts (102) des ersten Verbindungsteils (100) relativ zum ersten Abschnitt (101) des ersten Verbindungsteils (100) zuzulassen und
∘ in der Entriegelungsposition eine Bewegung des ersten Abschnitts (101) des ersten Verbindungsteils (100) relativ zum zweiten Verbindungsteil (200) zu gestatten und eine Bewegung des zweiten Abschnitts (102) des ersten Verbindungsteils (100) relativ zum ersten Abschnitt (101) des ersten Verbindungsteils (100) zu verhindern.

2. Kontakteinheit (1) nach Anspruch 1, wobei der erste Abschnitt (101) des ersten Verbindungsteils (100) und das zweite Verbindungsteil (200) jeweils eine Ausnehmung (111a, 211) aufweisen, wobei das Verriegelungselement (111) ausgebildet ist, in der Verriegelungsposition mit der Ausnehmung (111a) des ersten Abschnitts (101) des ersten Verbindungsteils (100) und der Ausnehmung (211) des zweiten Verbindungsteils (200) in Eingriff zu stehen.

3. Kontakteinheit (1) nach einem der Ansprüche 1 oder 2, wobei der Aktuator mit dem ersten Abschnitt (102) des ersten Verbindungsteils verbunden ist und ausgebildet ist, das Verriegelungselement (111) zwischen der Verriegelungsposition und der Entriegelungsposition zu bewegen.

4. Kontakteinheit (1) nach einem der vorherigen Ansprüche umfassend einen Elektromagneten (124) und ein Magnetgegenelement (224), wobei der Elektromagnet (124) ausgebildet ist, in einem aktiven Zustand und wenn der zweite Abschnitt (102) des ersten Verbindungsteils (100) und das zweite Verbindungsteil (200) in Kontaktierungsrichtung (12) aneinander liegen, mittels eines Magnetfelds zusammen mit dem Magnetgegenelement (224) eine magnetische Anziehungskraft zwischen dem zweiten Abschnitt (102) des ersten Verbindungsteils (100) und dem zweiten Verbindungsteil (200) bereitzustellen, wobei die magnetische Anziehungskraft mindestens so groß ist, dass damit der zweite Abschnitt (102) des ersten Verbindungselements (100) in einer Position gehalten wird, in der sich der erste elektrische Kontakt (121) und der zweite elektrische Kontakt (221) berühren.

5. Kontakteinheit (1) nach einem der vorherigen Ansprüche, wobei der erste elektrische Kontakt (121) einen ersten Leistungskontakt und der zweite elektrische Kontakt (221) einen zweiten Leistungskontakt umfasst.

6. Kontakteinheit (1) nach einem der vorherigen Ansprüche, wobei das erste Verbindungsteil (100) einen ersten Schutzleiterkontakt (122) und das zweite Verbindungsteil (200) einen zweiten Schutzleiterkontakt (222) umfasst, wobei der erste Schutzleiterkontakt (122) mit einem elektrischen Erdpotential elektrisch verbunden ist und ausgebildet ist, bei Berührung mit dem zweiten Schutzleiterkontakt (222) eine elektrische Verbindung des zweiten Schutzleiterkontaktes (222) mit dem elektrischen Erdpotential herzustellen.

7. Kontakteinheit (1) nach Anspruch 6, wobei der zweite Schutzleiterkontakt (222) mit einem Schutzleitervorspannelement (222a) zusammenwirkt, das ausgebildet ist, bei Berührung des ersten Schutzleiterkontaktes (122) mit dem zweiten Schutzleiterkontakt (222) eine Kontaktkraft zwischen dem ersten und zweiten Schutzleiterkontakt (122, 222) bereitzustellen und wobei der erste und der zweite Schutzleiterkontakt (122, 222) gegenüberliegend jeweils an einer Fläche angeordnet sind, die jeweils im Wesentlichen senkrecht zur Kontaktierungsachse (11) ausgerichtet ist.

8. Kontakteinheit (1) nach einem der vorherigen Ansprüche, wobei das zweite Verbindungsteil (200) einen beweglichen, mit einem Vorspannelement (240a) versehenen Kontaktschutzrücksteller (240) umfasst, der ausgebildet ist, wenn sich der erste Abschnitt (101) des ersten Verbindungsteils (100) in Ruheposition befindet, den zweiten Abschnitt (102) des ersten Verbindungsteils (100) in Kontaktierungsrichtung (12) relativ zum ersten Abschnitt (101) so zu verschieben, dass der erste elektrische Kontakt (121) und der zweite elektrische Kontakt (221) voneinander beabstandet werden.

9. Kontakteinheit (1) nach Anspruch 8, wobei der zweite elektrische Kontakt (221) bewegbar ist und umfassend eine kinematische Kopplung zwischen dem zweiten elektrischen Kontakt (221) und dem Kontaktschutzrücksteller (240), wobei die kinematische Kopplung ausgebildet ist, eine Bewegung des Kontaktrückstellers (240) auf den zweiten elektrischen Kontakt (221) zur Bereitstellung einer Berührung mit einer Kontaktkraft zwischen dem ersten elektrischen Kontakt (121) und dem zweiten elektrischen Kontakt (221) oder zum Beabstanden des ersten elektrischen Kontaktes (121) und des zweiten elektrischen Kontakts (221) voneinander zu übertragen.

10. Kontakteinheit (1) nach einem der vorherigen Ansprüche, umfassend eine mit dem ersten Verbindungsteil (100) verbundene Haltevorrichtung (190), die ausgebildet ist, eine Schnittstelle für eine Positionierung des ersten Verbindungsteils (100) bezüglich des zweiten Verbindungsteils (200) bereitzustellen.

11. Kontakteinheit (1) nach einem der vorherigen Ansprüche, wobei das erste Verbindungsteil (100) elektrisch mit einer elektrischen Energiequelle und das zweite Verbindungsteil (200) elektrisch mit einem aufladbaren elektrischen Energiespeicher verbunden ist oder das erste Verbindungsteil (100) elektrisch einem aufladbaren elektrischen Energiespeicher und das zweite Verbindungsteil (200) elektrisch mit einer elektrischen Energiequelle verbunden ist.

12. Kontakteinheit (1) nach einem der vorherigen Ansprüche, wobei das erste und/oder das zweite Verbindungsteil (100, 200) eine Temperaturkonditionierung aufweisen, die ausgebildet ist, eine Temperatur des ersten und/oder zweiten Verbindungsteils (100, 200) auf eine Temperatur kleiner als 120°C, bevorzugt 90°C, besonders bevorzugt 60°C einzustellen.

13. Verwendung einer Kontakteinheit (1) nach einem der vorhergehenden Ansprüche zum Wiederaufladen eines Batteriespeichers eines batterieelektrisch betriebenen Fahrzeugs.

14. Verfahren zum Betreiben einer Kontakteinheit (1), umfassend
- Anordnen eines ersten Verbindungsteils (100) mit einem ersten elektrischen Kontakt (121) und eines zweiten Verbindungsteils (200) mit einem zweiten elektrischen Kontakt (221), so dass das erste Verbindungsteil (121) und das zweite Verbindungsteil (200) zueinander entlang einer Kontaktierungsachse (11), die in einer Kontaktierungsrichtung (12) verläuft, bewegbar sind, wobei das erste Verbindungsteil (100) gegenüber dem zweiten Verbindungsteil (200) so entlang der Kontaktierungsachse (11) positionierbar ist, dass ein erster Abschnitt (101) des ersten Verbindungsteils (100) gegenüber dem zweiten Verbindungsteil (200) in einer Ruheposition zu liegen kommt;
- Positionieren eines ersten Abschnitts (101) des ersten Verbindungsteils (100) relativ zum zweiten Verbindungsteil (200) in der Ruheposition;
- Verschieben eines zweiten Abschnitts (102) des ersten Verbindungsteils (100) in Kontaktierungsrichtung (12) relativ zum ersten Abschnitt (101), so dass der zweite Abschnitt (102) des ersten Verbindungsteils (100) und das zweite Verbindungsteil (200) in Kontaktierungsrichtung (12) aneinander liegen sowie der erste elektrische Kontakt (121) und der zweite elektrische Kontakt (221) einander berühren,
**gekennzeichnet durch**
- Bewegen eines Verriegelungselements (111) in eine Verriegelungsposition, in der es eine Bewegung des ersten Abschnitts (101) des ersten Verbindungsteils (100) relativ zum zweiten Verbindungsteil (200) verhindert und eine Bewegung des zweiten Abschnitts (102) des ersten Verbindungsteils (100) relativ zum ersten Abschnitt (101) des ersten Verbindungsteils (100) zulässt; und
- Bewegen des Verriegelungselements (111) in eine Entriegelungsposition, in der es eine Bewegung des ersten Abschnitts (101) des ersten Verbindungsteils (100) relativ zum zweiten Verbindungsteil (200) gestattet und eine Bewegung des zweiten Abschnitts (102) des ersten Verbindungsteils (100) relativ zum ersten Abschnitt des ersten Verbindungsteils (100) verhindert.

## Claims

1. A contact unit (1) for establishing an electrically conducting connection, comprising:
- a first connecting part (100) including a first electrical contact (121) and a second connecting part (200) including a second electrical contact (221),
∘ the first connecting part (100) and the second connecting part (200) being arranged so as to be movable with respect to one another along a contacting axis (11), which extends in a contacting direction (12);
∘ the first connecting part (100) comprising a first section (101) and a second section (102), the second section (102) being movable with respect to the first section (101), and the first electrical contact (121) being arranged at the second section (102);
∘ the first connecting part (100) being positionable with respect to the second connecting part (200) along the contacting axis (11) in such a way that the first section (101) of the first connecting part (100) ends up in an idle position with respect to the second connecting part (200);
∘ the first electrical contact (121) and the second electrical contact (221) being designed, when they make contact with one another, to establish an electrically conducting connection between the first connecting part (100) and the second connecting part (200), which is designed to conduct electrical energy;
- a positioning unit (131, 110, 210), which is designed to predefine the idle position;
- an actuator (140), which is designed, when the first section (101) of the first connecting part (100) is in the idle position, to displace the second section (102) of the first connecting part (100) in the contacting direction (12) relative to the first section (101) in such a way that the second section (102) of the first connecting part (100) and the second connecting part (200) rest against one another in the contacting direction (12), and the first electrical contact (121) and the second electrical contact (221) are in contact with one another, **characterized by**
- a latching element (111), the latching element (111) being movable between a latching position and an unlatching position, the latching element (111) being designed
∘ in the latching position, to prevent a movement of the first section (101) of the first connecting part (100) relative to the second connecting part (200), and to allow a movement of the second section (102) of the first connecting part (100) relative to the first section (101) of the first connecting part (100), and
∘ in the unlatching position, to permit a movement of the first section (101) of the first connecting part (100) relative to the second connecting part (200), and to prevent a movement of the second section (102) of the first connecting part (100) relative to the first section (101) of the first connecting part (100).

2. The contact unit (1) according to claim 1, wherein the first section (101) of the first connecting part (100) and the second connecting part (200) in each case include a recess (111a, 211), the latching element (111) being designed, in the latching position, to be engaged with the recess (111a) of the first section (101) of the first connecting part (100) and the recess (211) of the second connecting part (200).

3. The contact unit (1) according to any one of claims 1 or 2, wherein the actuator is connected to the first section (102) of the first connecting part and is designed to move the latching element (111) between the latching position and the unlatching position.

4. The contact unit (1) according to any one of the preceding claims, comprising a solenoid (124) and a magnet counter-element (224), the solenoid (124) being designed, in an active state and when the second section (102) of the first connecting part (100) and the second connecting part (200) rest against one another in the contacting direction (12), to provide a magnetic attraction force between the second section (102) of the first connecting part (100) and the second connecting part (200) by means of a magnetic field, together with the magnet counter-element (224), the magnetic attraction force being at least so large that the second section (102) of the first connecting element (100) is held thereby in a position in which the first electrical contact (121) and the second electrical contact (221) make contact with one another.

5. The contact unit (1) according to any one of the preceding claims, wherein the first electrical contact (121) comprises a first power contact, and the second electrical contact (221) comprises a second power contact.

6. The contact unit (1) according to any one of the preceding claims, wherein the first connecting part (100) includes a first protective ground conductor contact (122), and the second connecting part (200) includes a second protective ground conductor contact (222), the first protective ground conductor contact (122) being electrically connected to electrical ground potential and being designed to establish an electrical connection between the second protective ground conductor contact (222) and the electrical ground potential upon contact with the second protective ground conductor contact (222).

7. The contact unit (1) according to claim 6, wherein the second protective ground conductor contact (222) cooperates with a protective ground conductor preloading element (222a), which is designed to provide a contact force between the first and second protective ground conductor contacts (122, 222) when the first protective ground conductor contact (122) makes contact with the second protective ground conductor contact (222), and wherein the first and second protective ground conductor contacts (122, 222) are arranged opposite one another, each at a surface that is in each case oriented substantially perpendicular to the contacting axis (11).

8. The contact unit (1) according to any one of the preceding claims, wherein the second connecting part (200) comprises a movable contact protection restoring element (240) provided with a preloading element (240a), which is designed, when the first section (101) of the first connecting part (100) is in the idle position, to displace the second section (102) of the first connecting part (100) in the contacting direction (12) relative to the first section (101) in such a way that the first electrical contact (121) and the second electrical contact (221) are spaced apart from one another.

9. The contact unit (1) according to claim 8, wherein the second electrical contact (221) is movable and comprises a kinematic coupling between the second electrical contact (221) and the contact protection restoring element (240), the kinematic coupling being designed to transmit a movement of the contact restoring element (240) to the second electrical contact (221) for providing a contact with a contact force between the first electrical contact (121) and the second electrical contact (221) or for spacing the first electrical contact (121) and the second electrical contact (221) apart from one another.

10. The contact unit (1) according to any one of the preceding claims, comprising a holding device (190) that is connected to the first connecting part (100) and designed to provide an interface for positioning the first connecting part (100) with respect to the second connecting part (200).

11. The contact unit (1) according to any one of the preceding claims, wherein the first connecting part (100) is electrically connected to an electrical energy source, and the second connecting part (200) is electrically connected to a chargeable electrical energy store, or the first connecting part (100) is electrically connected to a chargeable electrical energy store, and the second connecting part (200) is electrically connected to an electrical energy source.

12. The contact unit (1) according to any one of the preceding claims, wherein the first and/or second connecting parts (100, 200) include temperature conditioning, which is designed to set a temperature of the first and/or second connecting parts (100, 200) to a temperature of less than 120°C, preferably 90°C, and particularly preferably 60°C.

13. Use of a contact unit (1) according to any one of the preceding claims for recharging a storage battery of a battery-electric vehicle.

14. A method for operating a contact unit (1), comprising:
- arranging a first connecting part (100) including a first electrical contact (121) and a second connecting part (200) including a second electrical contact (221) so that the first connecting part (121) and the second connecting part (200) can be moved with respect to one another along a contacting axis (11) extending in a contacting direction (12), the first connecting part (100) being positionable with respect to the second connecting part (200) along the contacting axis (11) in such a way that a first section (101) of the first connecting part (100) ends up in an idle position with respect to the second connecting part (200);
- positioning a first section (101) of the first connecting part (100) relative to the second connecting part (200) in the idle position;
- displacing a second section (102) of the first connecting part (100) in the contacting direction (12) relative to the first section (101) so that the second section (102) of the first connecting part (100) and the second connecting part (200) rest against one another in the contacting direction (12), and the first electrical contact (121) and the second electrical contact (221) are in contact with one another,
**characterized by**
- moving a latching element (111) into a latching position in which it prevents a movement of the first section (101) of the first connecting part (100) relative to the second connecting part (200), and allows a movement of the second section (102) of the first connecting part (100) relative to the first section (101) of the first connecting part (100), and
- moving the latching element (111) into an unlatching position in which it permits a movement of the first section (101) of the first connecting part (100) relative to the second connecting part (200), and prevents a movement of the second section (102) of the first connecting part (100) relative to the first section of the first connecting part (100).

## Revendications

1. Unité de contact (1) permettant d'établir une connexion électriquement conductrice, comprenant
- une première pièce de connexion (100) comprenant un premier contact électrique (121) et une seconde pièce de connexion (200) comprenant un second contact électrique (221), dans laquelle
∘ la première pièce de connexion (100) et la seconde pièce de connexion (200) sont agencées de manière à être mobiles l'une par rapport à l'autre le long d'un axe de mise en contact (11) qui s'étend dans une direction de mise en contact (12) ;
∘ la première pièce de connexion (100) comprend une première section (101) et une seconde section (102), dans laquelle la seconde section (102) est mobile par rapport à la première section (101) et le premier contact électrique (121) est agencé au niveau de la seconde section (102) ;
∘ la première pièce de connexion (100) peut être positionnée par rapport à la seconde pièce de connexion (200) le long de l'axe de mise en contact (11) de sorte que la première section (101) de la première pièce de connexion (100) vient se placer dans une position de repos par rapport à la seconde pièce de connexion (200) ;
∘ le premier contact électrique (121) et le second contact électrique (221) sont conçus de manière à, lorsqu'ils se touchent, établir entre la première pièce de connexion (100) et la seconde pièce de connexion (200) une connexion électriquement conductrice conçue pour conduire de l'énergie électrique ;
- une unité de positionnement (131, 110, 210) conçue pour spécifier la position de repos ;
- un actionneur (140) conçu pour, lorsque la première section (101) de la première pièce de connexion (100) est en position de repos, déplacer la seconde section (102) de la première pièce de connexion (100) dans la direction de mise en contact (12) par rapport à la première section (101) de sorte que la seconde section (102) de la première pièce de connexion (100) et la seconde pièce de connexion (200) se trouvent l'une contre l'autre dans la direction de mise en contact (12) et que le premier contact électrique (121) et le second contact électrique (221) se touchent ; **caractérisé par**
- un élément de verrouillage (111), dans laquelle l'élément de verrouillage (111) est mobile entre une position de verrouillage et une position de déverrouillage, dans laquelle l'élément de verrouillage (111) est conçu pour,
∘ dans la position de verrouillage, empêcher un mouvement de la première section (101) de la première pièce de connexion (100) par rapport à la seconde pièce de connexion (200) et permettre un mouvement de la seconde section (102) de la première pièce de connexion (100) par rapport à la première section (101) de la première pièce de connexion (100) et
∘ dans la position de déverrouillage, permettre un mouvement de la première section (101) de la première pièce de connexion (100) par rapport à la seconde pièce de connexion (200) et empêcher un mouvement de la seconde section (102) de la première pièce de connexion (100) par rapport à la première section (101) de la première pièce de connexion (100).

2. Unité de contact (1) selon la revendication 1, dans laquelle la première section (101) de la première pièce de connexion (100) et la seconde pièce de connexion (200) présentent respectivement un évidement (111a, 211), dans laquelle l'élément de verrouillage (111) est conçu pour, dans la position de verrouillage, être en prise avec l'évidement (111a) de la première section (101) de la première pièce de connexion (100) et avec l'évidement (211) de la seconde pièce de connexion (200).

3. Unité de contact (1) selon la revendication 1 ou 2, dans laquelle l'actionneur est relié à la première section (102) de la première pièce de connexion et est conçu pour déplacer l'élément de verrouillage (111) entre la position de verrouillage et la position de déverrouillage.

4. Unité de contact (1) selon l'une quelconque des revendications précédentes, comprenant un électroaimant (124) et un contre-élément magnétique (224), dans laquelle l'électroaimant (124) est conçu pour, dans un état actif et lorsque la seconde section (102) de la première pièce de connexion (100) et la seconde pièce de connexion (200) se trouvent l'une contre l'autre dans la direction de mise en contact (12), fournir une force d'attraction magnétique entre la seconde section (102) de la première pièce de connexion (100) et la seconde pièce de connexion (200) au moyen d'un champ magnétique et du contre-élément magnétique (224), dans laquelle la force d'attraction magnétique est au moins suffisamment grande pour que la seconde section (102) du premier élément de connexion (100) soit retenue dans une position dans laquelle le premier contact électrique (121) et le second contact électrique (221) se touchent.

5. Unité de contact (1) selon l'une quelconque des revendications précédentes, dans laquelle le premier contact électrique (121) comprend un premier contact de puissance et le second contact électrique (221) comprend un second contact de puissance.

6. Unité de contact (1) selon l'une quelconque des revendications précédentes, dans laquelle la première pièce de connexion (100) comprend un premier contact de conducteur de protection (122) et la seconde pièce de connexion (200) comprend un second contact de conducteur de protection (222), dans laquelle le premier contact de conducteur de protection (122) est relié électriquement à un potentiel électrique de terre et est conçu pour établir une connexion électrique entre le second contact de conducteur de protection (222) et le potentiel électrique de terre lorsqu'il y a contact avec le second contact de conducteur de protection (222).

7. Unité de contact (1) selon la revendication 6, dans laquelle le second contact de conducteur de protection (222) coopère avec un élément de précontrainte de conducteur de protection (222a) conçu pour fournir une force de contact entre les premier et second contacts de conducteur de protection (122, 222) lorsque le premier contact de conducteur de protection (122) touche le second contact de conducteur de protection (222), et dans laquelle les premier et second contacts de conducteur de protection (122, 222) sont agencés en vis-à-vis au niveau d'une surface respectivement alignée de manière essentiellement perpendiculaire par rapport à l'axe de mise en contact (11).

8. Unité de contact (1) selon l'une quelconque des revendications précédentes, dans laquelle la seconde pièce de connexion (200) comprend un dispositif de réinitialisation de protection de contact (240) mobile muni d'un élément de précontrainte (240a) conçu pour, lorsque la première section (101) de la première pièce de connexion (100) se trouve dans la position de repos, déplacer la seconde section (102) de la première pièce de connexion (100) par rapport à la première section (101) dans la direction de mise en contact (12) de sorte que le premier contact électrique (121) et le second contact électrique (221) sont espacés l'un de l'autre.

9. Unité de contact (1) selon la revendication 8, dans laquelle le second contact électrique (221) est mobile et comprend un couplage cinématique entre le second contact électrique (221) et le dispositif de réinitialisation de protection de contact (240), dans laquelle le couplage cinématique est conçu pour transmettre un mouvement du dispositif de réinitialisation de contact (240) au second contact électrique (221) afin de fournir un contact, présentant une force de contact, entre le premier contact électrique (121) et le second contact électrique (221) ou afin d'espacer le premier contact électrique (121) et le second contact électrique (221) l'un de l'autre.

10. Unité de contact (1) selon l'une quelconque des revendications précédentes, comprenant un dispositif de retenue (190) relié à la première pièce de connexion (100) et conçu pour fournir une interface en vue du positionnement de la première pièce de connexion (100) par rapport à la seconde pièce de connexion (200).

11. Unité de contact (1) selon l'une quelconque des revendications précédentes, dans laquelle la première pièce de connexion (100) est reliée électriquement à une source d'énergie électrique et la seconde pièce de connexion (200) est reliée électriquement à un accumulateur d'énergie électrique rechargeable, ou la première pièce de connexion (100) est reliée électriquement à un accumulateur d'énergie électrique rechargeable et la seconde pièce de connexion (200) est reliée électriquement à une source d'énergie électrique.

12. Unité de contact (1) selon l'une quelconque des revendications précédentes, dans laquelle la première et/ou la seconde pièce de connexion (100, 200) présente(nt) un conditionnement de température conçu pour ajuster une température de la première et/ou de la seconde pièce de connexion (100, 200) à une température inférieure à 120°C, de manière préférée à 90°C, de manière particulièrement préférée à 60°C.

13. Utilisation d'une unité de contact (1) selon l'une quelconque des revendications précédentes pour recharger un accumulateur de batterie d'un véhicule électrique fonctionnant sur batterie électrique.

14. Procédé de fonctionnement d'une unité de contact (1), comprenant les étapes consistant à :
- agencer une première pièce de connexion (100) comprenant un premier contact électrique (121) et une seconde pièce de connexion (200) comprenant un second contact électrique (221) de sorte que la première pièce de connexion (121) et la seconde pièce de connexion (200) sont mobiles l'une par rapport à l'autre le long d'un axe de mise en contact (11) qui s'étend dans une direction de mise en contact (12), dans laquelle la première pièce de connexion (100) peut être positionnée par rapport à la seconde pièce de connexion (200) le long de l'axe de mise en contact (11) de sorte qu'une première section (101) de la première pièce de connexion (100) vient se placer dans une position de repos par rapport à la seconde pièce de connexion (200) ;
- positionner une première section (101) de la première pièce de connexion (100) en position de repos par rapport à la seconde pièce de connexion (200) ;
- déplacer une seconde section (102) de la première pièce de connexion (100) par rapport à la première section (101) dans la direction de mise en contact (12) de sorte que la seconde section (102) de la première pièce de connexion (100) et la seconde pièce de connexion (200) se trouvent l'une contre l'autre dans la direction de mise en contact (12) et que le premier contact électrique (121) et le second contact électrique (221) se touchent,
**caractérisé par** les étapes consistant à :
- déplacer un élément de verrouillage (111) dans une position de verrouillage dans laquelle il empêche un mouvement de la première section (101) de la première pièce de connexion (100) par rapport à la seconde pièce de connexion (200) et permet un mouvement de la seconde section (102) de la première pièce de connexion (100) par rapport à la première section (101) de la première pièce de connexion (100) ; et
- déplacer l'élément de verrouillage (111) dans une position de déverrouillage dans laquelle il permet un mouvement de la première section (101) de la première pièce de connexion (100) par rapport à la seconde pièce de connexion (200) et empêche un mouvement de la seconde section (102) de la première pièce de connexion (100) par rapport à la première section de la première pièce de connexion (100).
